(19) Europäisches Patentamt / European Patent Office / Office européen des brevets

(11) EP 3 330 928 A1

(12) **EUROPEAN PATENT APPLICATION**
published in accordance with Art. 153(4) EPC

(43) Date of publication:
06.06.2018 Bulletin 2018/23

(51) Int Cl.:
*G06T 19/00* (2011.01)

(21) Application number: 15899623.1

(22) Date of filing: 28.07.2015

(86) International application number:
PCT/JP2015/071392

(87) International publication number:
WO 2017/017790 (02.02.2017 Gazette 2017/05)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicant: Hitachi, Ltd.
Chiyoda-ku
Tokyo 100-8280 (JP)

(72) Inventors:
• UTSUGI, Kei
Tokyo 100-8280 (JP)
• KOBAYASHI, Miho
Tokyo 100-8280 (JP)
• ARA, Koji
Tokyo 100-8280 (JP)

(74) Representative: MERH-IP Matias Erny Reichl
Hoffmann
Patentanwälte PartG mbB
Paul-Heyse-Strasse 29
80336 München (DE)

(54) **IMAGE GENERATION DEVICE, IMAGE GENERATION SYSTEM, AND IMAGE GENERATION METHOD**

(57)    To arrange an entire peripheral image in the virtual three-dimensional space in an easy-to-grasp manner, it is provided an image generation device, which is configured to generate an image to be displayed on a display device, the image generation device comprising: a processor configured to execute a program; and a memory configured to store the program, wherein the processor is configured to: arrange a three-dimensional model of an object existing in a real space in a virtual three-dimensional space; arrange at least one tube-shaped virtual screen including a predetermined photographing position in the virtual three-dimensional space; execute arithmetic processing of mapping an entire peripheral image captured at the predetermined photographing position to the at least one tube-shaped virtual screen; and generate image data for displaying, in a panoramic view, the virtual three-dimensional space in which the three-dimensional model and the at least one tube-shaped virtual screen are arranged.

Fig. 2

EP 3 330 928 A1

**Description**

BACKGROUND OF THE INVENTION

This invention relates to an image generation device.

WO 2008/147561 A2 and JP 2007-226580 A are known as the background art of this technical field.

In WO 2008/147561 A2, there is disclosed a system, which may be used to view a panoramic image. The system includes a panorama viewer configured to receive at least a portion of a first panoramic image and provide a viewport for displaying the portion of the first panoramic image. The viewport includes a three-dimensional overlay that is rendered with the first panoramic image. In a case where the three-dimensional overlay is rendered with the first panoramic image, the panorama viewer changes the orientation of the three-dimensional overlay in a three-dimensional space so as to match a change in orientation of the first panoramic image within the viewport.

Meanwhile, in JP 2007-226580 A, there is disclosed an image output device including: an image storage unit configured to store two or more background object images and background position information, which is information for indicating positions of the background object images, in association with each other; a positional information reception unit configured to receive positional information for indicating a position and line-of-sight direction of the user; an image selection unit configured to select a background object image corresponding to the position of the user indicated by the positional information; a rendering unit configured to generate an output image using the positional information from the background object image selected by the image selection unit and mapped to an inner surface of a three-dimensional cylinder; and an output unit configured to output the output image.

SUMMARY OF THE INVENTION

There is known a technology of entire peripheral photography by one or a plurality of cameras. However, an image obtained by the entire peripheral photography has a large distortion and gives a sense of strangeness, and thus a method of presenting the image is not so simple compared to when an image obtained by an ordinary camera is displayed. In many cases, as in WO 2008/147561 A2, an image obtained by cutting out a portion of an entire peripheral image is used. Such display results in a significant difficulty in grasping the positional relationship of objects displayed on entire peripheral images particularly when such entire peripheral images are captured at a plurality of positions. Meanwhile, in order to reconstruct a complete three-dimensional model from a plurality of images, a large amount of images and depth information are required, and the reconstructed image often does not have enough reconstruction accuracy. Therefore, there is a necessity for establishing practical display means for naturally associating the three-dimensional position of each object with visual information obtained from an entire peripheral image, to thereby enable recognition of the surroundings in a panoramic view.

In the system disclosed in WO 2008/147561 A2 described above, a portion of the captured entire peripheral image is displayed in association with a map position. However, the map and the image are displayed on separate windows, resulting in a difficulty in grasping the relationship between a position indicated on the map and a viewpoint position on the image. Further, when entire peripheral images captured at a plurality of positions are displayed in combination, it is difficult to intuitively grasp a relationship between the image and the map or a relationship between the images.

Meanwhile, in the device disclosed in JP 2007-226580 A, a panoramic image is mapped to a cylindrical virtual screen for display, which is then used as the background image in a virtual space. However, this technology displays only one panoramic image at a time, and does not consider displaying a plurality of panoramic images.

The representative one of inventions disclosed in this application is outlined as follows. There is provided an image generation device, which is configured to generate an image to be displayed on a display device, the image generation device comprising: a processor configured to execute a program; and a memory configured to store the program. The processor arranges a three-dimensional model of an object existing in a real space in a virtual three-dimensional space; arranges at least one tube-shaped virtual screen including a predetermined photographing position in the virtual three-dimensional space; executes arithmetic processing of mapping an entire peripheral image captured at the predetermined photographing position to the at least one tube-shaped virtual screen; and generates image data for displaying, in a panoramic view, the virtual three-dimensional space in which the three-dimensional model and the at least one tube-shaped virtual screen are arranged.

According to an aspect of this invention, it is possible to arrange an entire peripheral image in the virtual three-dimensional space in an easy-to-grasp manner. Problems, configurations, and effects other than those described above are made clear from the following description of embodiments of this invention.

BRIEF DESCRIPTION OF THE DRAWINGS

FIG. 1 is a diagram for illustrating a space in which actual work is conducted.

FIG. 2 is a diagram for illustrating the virtual space to be represented by a computer system according to a first embodiment.

FIG. 3 is a block diagram for illustrating a configuration of the computer system for displaying models in the virtual space in the first embodiment.

FIG. 4 is a block diagram for illustrating a hardware configuration of the image generation device according to the first embodiment.

FIG. 5A is a perspective view of a camera according to the first embodiment.

FIG. 5B is a side view of the camera according to the first embodiment.

FIG. 6 is a diagram for illustrating an example of a format of the image of the hemisphere.

FIG. 7A is a diagram for illustrating an example of rendering an image captured by an omnidirectional camera on an inner surface of a virtual screen formed in a cylindrical shape according to the first embodiment.

FIG. 7B is a diagram for illustrating an example of rendering an image captured by the omnidirectional camera on an inner surface of a virtual screen formed in a cylindrical shape with a part of a side of the cylinder being a planar portion according to the first embodiment.

FIG. 7C is a top view of a real space for illustrating positions of a worker and an equipment according to the first embodiment.

FIG. 7D is a diagram for illustrating a position on the virtual screen at which an image is projected according to the first embodiment.

FIG. 8 is a flowchart of a photographing routine according to the first embodiment.

FIG. 9 is a flowchart of an equipment information collection routine according to the first embodiment.

FIG. 10 is a flowchart of an information display routine according to the first embodiment.

FIG. 11 is a flowchart of an initialization processing according to the first embodiment.

FIG. 12 is a diagram for illustrating an example of image management information according to the first embodiment.

FIG. 13A is a diagram for illustrating an example of a configuration of camera arrangement information according to the first embodiment.

FIG. 13B is a diagram for illustrating an example of a configuration of the equipment arrangement information according to the first embodiment.

FIG. 14A and FIG. 14B are diagrams for illustrating arrangement of cameras for capturing an entire peripheral image and arrangement of a cylindrical virtual screen according to a second embodiment.

FIG. 15A and FIG. 15B are Voronoi diagrams in which Voronoi points refer to positions of cameras according to the second embodiment.

FIG. 16 is a flowchart of camera selection processing according to the second embodiment.

FIG. 17 is a diagram for illustrating an example of a configuration of camera arrangement information according to the second embodiment.

FIG. 18 is a diagram for illustrating an example of user interaction to be displayed on a cylindrical virtual screen according to a third embodiment.

FIG. 19 is a side view of the camera according to a fourth embodiment.

FIG. 20A is a diagram for illustrating a work space according to the fourth embodiment.

FIG. 20B is a diagram for illustrating an example of a virtual space to be represented by a computer system according to the fourth embodiment.

FIG. 21 is a diagram for illustrating a data structure that stores a movable path of a camera according to the fourth embodiment.

FIG. 22 is a flowchart of processing of moving and photographing by the camera according to the fourth embodiment.

FIG. 23A and FIG. 23B are diagrams for illustrating an example of rendering a three-dimensional model on a virtual screen according to a fifth embodiment.

FIG. 24 is a flowchart of the information display routine according to the fifth embodiment.

DETAILED DESCRIPTION OF THE PREFERRED EMBODIMENTS

Now, embodiments of this invention are described with reference to the accompanying drawings.

The embodiments to be described below do not limit the invention as defined in the appended claims. All the combinations of components described in the embodiments are not always necessary for solutions of this invention. In the following description, although pieces of information of this invention are described by using such expressions as "xxx table", "xxx list", "xxx DB", and "xxx queue", those pieces of information may be expressed by data structures other than a table, a list, a DB, a queue, and the like. Therefore, "xxx table", "xxx list", "xxx DB", "xxx queue", and the like are sometimes referred to as "xxx information" in order to show that those pieces of information are independent of their data structures.

In addition, although such expressions as "identification information", "identifier", "name", and "ID" are used in order to describe details of each piece of information, those expressions are interchangeable.

In addition, the embodiments of this invention described later may be implemented by software running on a general-purpose computer, by dedicated hardware, or by a combination of software and hardware.

In the following description, processing is sometimes described by using a "program" as a subject. However, the program is executed by a processor (e.g., central processing unit (CPU)), to thereby execute predetermined processing while using a storage resource (e.g., memory), a communication I/F, and a port. Thus, the processing may also be described by using a "processor" as a subject.

The processing described by using a "program" as a subject may also be processing performed by a computer including a processor (e.g., computing host or storage apparatus). Further, in the following description, the expression "controller" may refer to a processor or a hardware circuit configured to perform a part or all of processing procedures to be performed by the processor. Programs may be installed onto each computer from a program source (e.g., program distribution server or computer-readable storage medium). In this case, the program distribution server includes a CPU and a storage resource, and the storage resource stores a distribution program and a program to be distributed. The CPU of the program distribution server executes the distribution program, to thereby distribute the program to be distributed to other computers.

A management server includes input/output devices. As examples of the input/output devices, a display, a keyboard, and a pointer device are conceivable, but the input/output devices may be other devices. Moreover, a serial interface or an Ethernet interface may be used as an input/output device as an alternative to the input/output devices, and input and display on the input/output devices may be substituted by coupling, to the interface, a computer for display including a display, a keyboard, or a pointer device, transmitting information for display to the computer for display, and receiving information for input from the computer for display, thereby performing display on the computer for display and receiving the input from the computer for display.

<First Embodiment

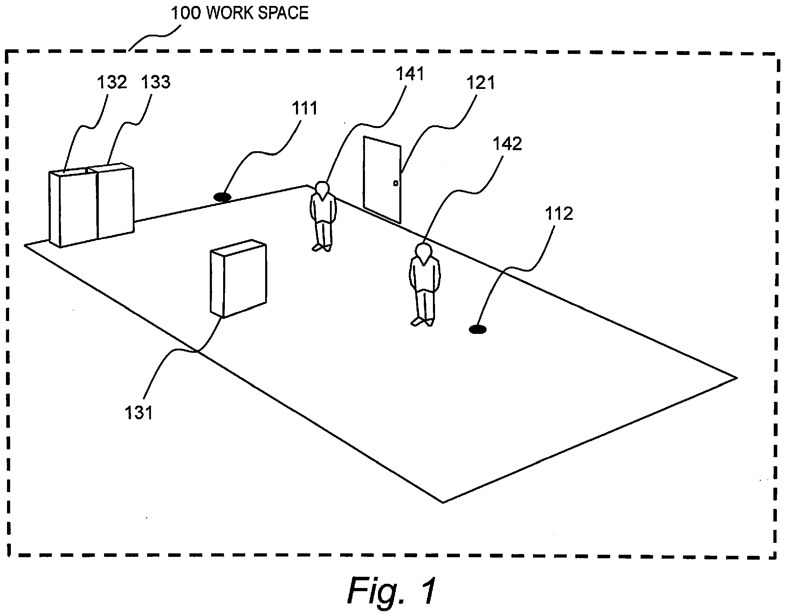

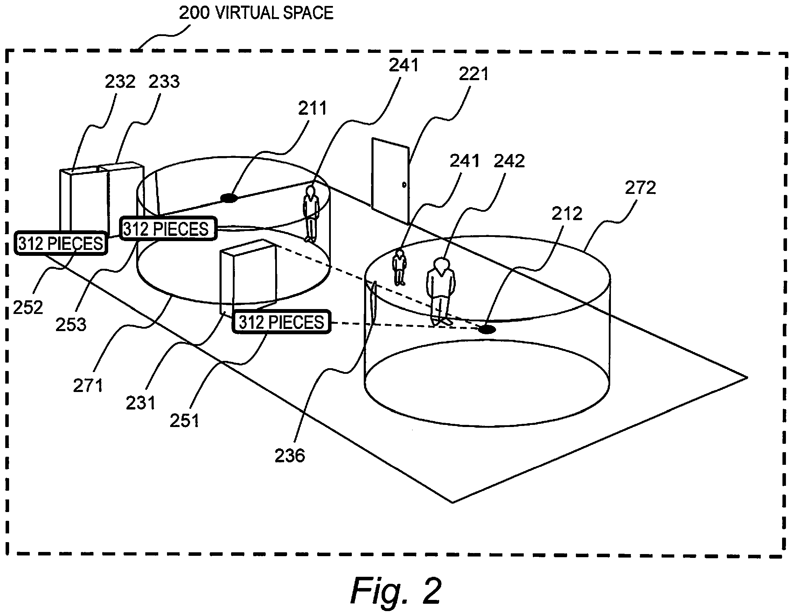

A system according to a first embodiment of this invention visualizes surroundings of a real space 100 illustrated in FIG. 1 on a virtual space 200 illustrated in FIG. 2. FIG. 1 is a diagram for illustrating the space 100 in which actual work is conducted.

The real space 100 is a real space to be represented. Cameras 111 and 112 capable of 360-degree photography described later are installed in the space 100. The cameras 111 and 112 are installed on a ceiling of a room serving as the work space 100. Instead, the cameras 111 and 112 may be installed on a floor, or at a predetermined height (e.g., 1 meter) from the floor.

Further, the space 100 includes a door 121. The door 121 may be a door for getting into or out of the room serving as the work space 100, or may be an elevator door.

Further, the space 100 accommodates equipments 131 to 133 fixedly installed in the space 100. As described later, the equipments 131 to 133 include electronic devices capable of electronically collecting states of the equipments 131 to 133. For example, in a case where the equipments 131 to 133 are racks installed in a warehouse, a worker inputs his or her ID and extracts an item. For example, the equipments 131 to 133 are racks installed in a warehouse, and collect and output information on the number and weight of items stored in the racks, and a number by which each item has increased or decreased. Alternatively, the equipments 131 to 133 are factory equipment, for example, a motor, and collect and output information on the number of times of activation, number of revolutions, applied voltage, current, and temperature of the equipment. Alternatively, the equipments 131 to 133 are computers installed in a data center, and collect and output information on the amount of resources used in the computers.

Further, the space 100 includes workers 141 and 142.

FIG. 2 is a diagram for illustrating the virtual space 200 to be represented by a computer system according to the first embodiment.

The virtual space 200 illustrated in FIG. 2 is constructed as a 3D model for visually representing surroundings of the real space 100, and is formed of three-dimensional models associated with various kinds of objects arranged in the real space and three-dimensional points (x, y, z) at which those three-dimensional models are arranged.

Now, a description is given of three-dimensional models included in the virtual space 200. In FIG. 2, three-dimensional models corresponding to fixed equipment of the real space 100 are arranged in the virtual space 200. Specifically, a three-dimensional model 221 is arranged at a position corresponding to the door 121, and three-dimensional models 231 to 233 are arranged at positions corresponding to the equipments 131 to 133, respectively.

Further, values or character strings 251 to 253 for indicating states of the equipments 131 to 133 are displayed in association with the three-dimensional models 231 to 233 corresponding to the equipments 131 to 133, respectively. The values indicating the states of the equipments 131 to 133 are, for example, the temperature, activation frequency, and left amount of resources of the equipment.

Photography viewpoints 211 and 212 of the cameras 111 and 112 are displayed in the virtual space 200, and virtual screens 271 and 272 are displayed around the photography viewpoints 211 and 212, respectively. An image 241 of the worker 141 captured by the camera 111 is displayed on the virtual screen 271. Further, the images 241 and 242 of the workers 141 and 142 captured by the camera 112 are displayed on the virtual screen 272. Further, an image 236 of the equipment 131 captured by the camera 112 is displayed on the virtual screen 272.

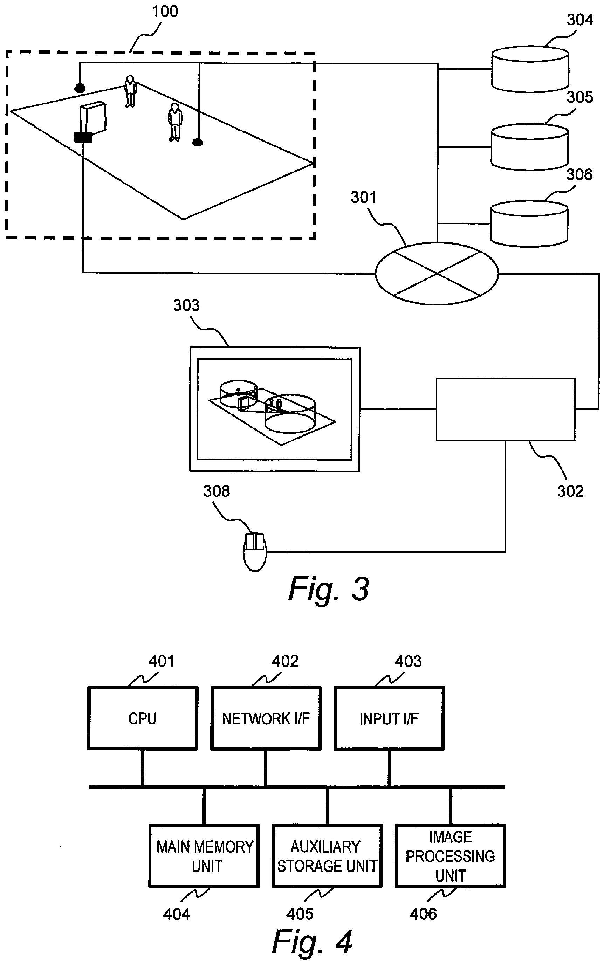

FIG. 3 is a block diagram for illustrating a configuration of the computer system for displaying models in the virtual space in the first embodiment.

Information on the virtual space 200 is formed into an image by an image generation device 302 coupled to a network 301, and is output to an output device 303. The output device 303 is a display device or a printer. The image generation device 302 is a general-purpose computer including a central processing unit, a memory unit, and an interface device to be coupled to the outside.

Databases 304, 305, and 306 are coupled to the network 301. The databases 304, 305, and 306 are storage areas accessible from an apparatus coupled to the network 301. The database 304 stores images captured by cameras at the photography viewpoints 211 and 212. The database 305 stores image management information on images captured by cameras. The database 306 stores the states of the equipments 131 to 133.

FIG. 4 is a block diagram for illustrating a hardware configuration of the image generation device 302 according to the first embodiment.

The image generation device 302 includes an arithmetic processing unit (CPU) 401, which operates in accordance with a program stored in a main memory unit 404, the main memory unit 404, which stores a program to be executed by the arithmetic processing unit 401, an input interface 403, which receives a signal from an input device 308, an auxiliary storage unit 405, which stores data necessary for operation, a network interface 402, which controls communication to/from the network, and an image processing unit 406, which generates an image to be output from the output device 303.

The main memory unit 404 includes a ROM, which is a non-volatile memory element, and a RAM, which is a volatile memory element. The ROM stores a fixed program (e.g., BIOS) and the like. The RAM is a high-speed and volatile memory element, for example, a dynamic random access memory (DRAM), and temporarily stores a program stored in the auxiliary storage unit 405 and data to be used at the time of execution of the program.

The auxiliary storage unit 405 includes a non-volatile mass storage device such as a hard disk drive (HDD) or a flash memory (SSD), and stores a program to be executed by the arithmetic processing unit 401 and data to be used at the time of execution of the program. In other words, the program is read from the auxiliary storage unit 405, loaded into the main memory unit 404, and executed by the arithmetic processing unit 401.

Image generation processing to be executed by the image processing unit 406 involves using a three-dimensional model, which is a set of, for example, triangle meshes registered in advance, to execute rendering processing for simulating a two-dimensional image as viewed at a certain viewpoint position. The feature of this invention resides in implementing panoramic display by combining 360-degree images captured by the plurality of cameras 111 and 112 using such general rendering processing.

A program to be executed by the arithmetic processing unit 401 is provided to the image generation device 302 via a removable medium (e.g., CD-ROM or flash memory) or via the network, and is stored into the auxiliary storage unit 405, which is a non-transitory storage medium. Thus, the image generation device 302 desirably includes an interface for reading data from the removable medium.

The image generation device 302 is a computer system constructed on one physical computer or a plurality of logical or physical computers, and the programs described above may be executed by separate threads on the same computer or may be executed on a virtual computer constructed on a plurality of physical computer resources. Further, the image generation device 302 and other devices may be accommodated into one physical or logical computer. A part of functions provided by the arithmetic processing unit 401 may be implemented by other logical circuits (e.g., FPGA).

The cameras 111 and 112 installed in the work space 100 may be, for example, network cameras that photograph a lower portion (hemisphere of 360 degrees in horizontal direction and 180 degrees in vertical direction) from the ceiling using a fish-eye lens, or network cameras that photograph an entire 360-degree surface (sphere) by combining images of a plurality of wide angle cameras.

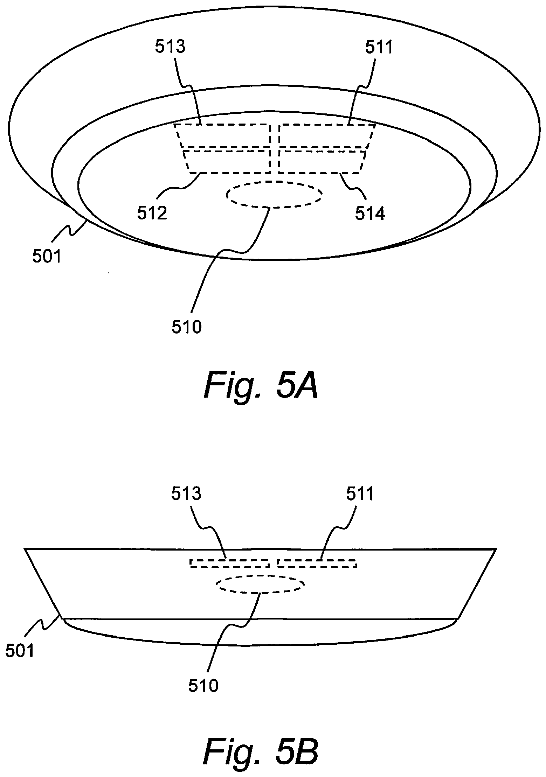

FIG. 5A is a perspective view of the cameras 111 and 112 according to the first embodiment as viewed from below those cameras, and FIG. 5B is a side view of the cameras 111 and 112 according to the first embodiment. Omnidirectional cameras 501 illustrated in FIG. 5A and FIG. 5B may be used as the cameras 111 and 112.

The camera 501 is installed on the ceiling, photographs the lower hemisphere (360 degrees in horizontal direction) on the floor side, and stores the image and image management information into the database 304 and the database 305, respectively. The camera 501 includes a fish-eye photography lens, a CCD sensor 510, a memory 511, which stores a calibration pattern, a memory unit 512, which stores a camera image, a network connection unit 513, and an arithmetic control unit 514, which controls those units. Operation of the camera 501 can be controlled by an instruction to capture a still image, an instruction to start capturing a moving image, or an instruction to end capturing a moving image, which are transmitted via a network. Individual network cameras can be implemented by a combination of known technologies.

The camera 501 stores, in the memory 511, a correspondence table for associating a point on an image captured by the camera with a point on an image format, which is obtained by calibrating internal parameters of the camera in advance using a predetermined test pattern.

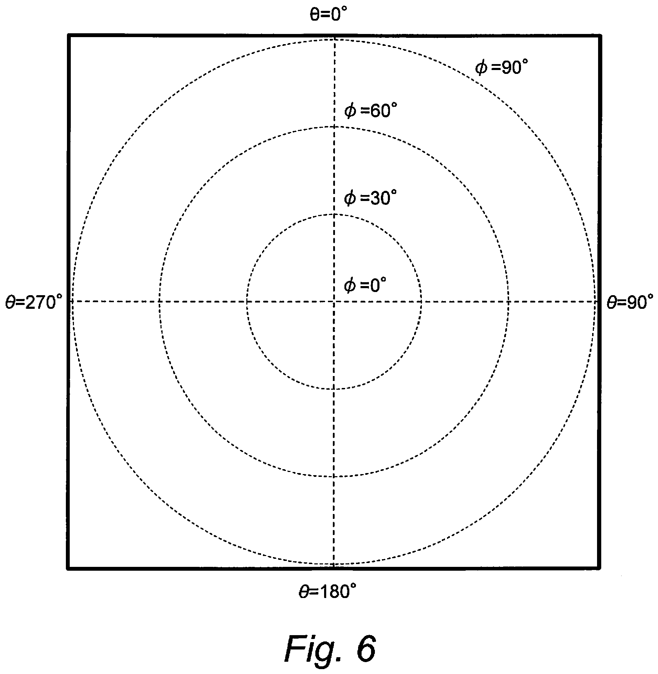

FIG. 6 is a diagram for illustrating an example of a format of the image of the hemisphere.

The correspondence relationship between an image having an image size of a width *PX* and a height *PY,* and a point (*px, py*) on the image is represented by Expression (1) for an angle value $\theta$ in the horizontal direction and an angle value $\varphi$ in the vertical direction at the time of photography.

$$px = \frac{PX(1+\phi\sin\theta)}{2} , \quad py = \frac{PY(1+\phi\cos\theta)}{2} \quad \cdots (1)$$

Further, the cameras 111 and 112 to be used in this invention are not limited to the omnidirectional cameras 501 illustrated in FIG. 5A and FIG. 5B, which photograph the hemisphere and are installed on the ceiling, and the image format is not limited to the image format illustrated in FIG. 6. Instead, each of the cameras 111 and 112 may be implemented by a camera for capturing a sphere image by combining a plurality of captured wide angle images in different directions, and the image format may be implemented using another image format that uniquely associates an angle with a pixel color.

In the first embodiment, an image captured by an omnidirectional camera is displayed on a tube-shaped virtual screen. The tube-shaped virtual screen may have various kinds of shapes, for example, cylindrical shapes 271 and 272 illustrated in FIG. 2.

In the following description, the point 211 in the virtual space, which corresponds to a photographing position of the camera 111, is referred to as a photography viewpoint ($x_c, y_c, z_c$). The virtual screen is arranged so as to surround this photography viewpoint ($x_c, y_c, z_c$).

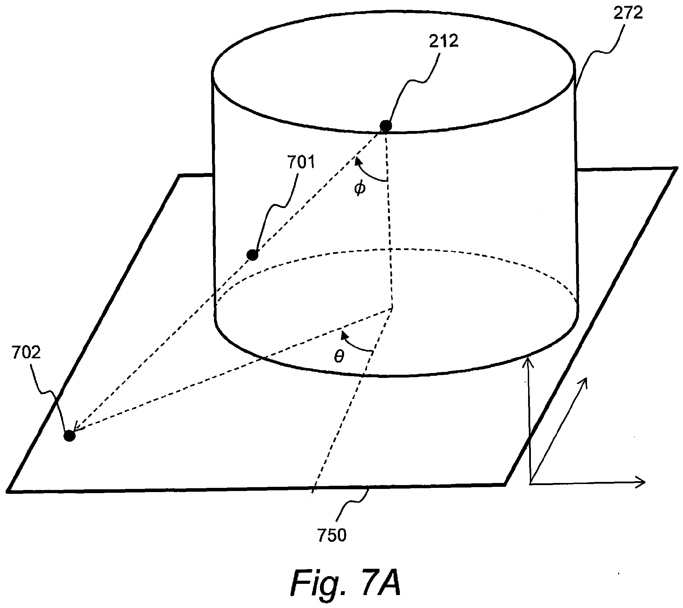

FIG. 7A is a diagram for illustrating an example of forming the virtual screen 272 in a cylindrical shape and rendering an image captured by the omnidirectional camera on the inner surface of the virtual screen 272 according to the first embodiment. The rendered image is mapped to the inner surface of the cylinder, and is not rendered on the outer surface and top surface of the cylinder. The image may be rendered on the bottom surface of the cylinder.

In the first embodiment, this cylindrical geometric shape is rendered through approximation by 64-sided prisms and representation by triangle meshes, followed by linear interpolation of an image in each triangle mesh to reduce a distortion of the image.

The cylindrical surface is represented by a set of points (*x, y, z*) represented by Expression (2) and Expression (3).

$$\left(x - x_c\right)^2 + \left(z - z_c\right)^2 = r^2 \quad \cdots (2)$$

$$0 < y < h \quad \cdots (3)$$

In Expression (2) and Expression (3), *h* represents the height of the cylinder, and *r* represents the radius of the cylinder.

At this time, the following technique is used to associate a point 701 on the cylinder with a point on the captured image for mapping. The amount of relative positional deviation from the point ($x_c, y_c, z_c$) to the point 701 (*x, y, z*) on the cylindrical surface is represented by ($x_0, y_0, z_0$).

$$x_0 = x - x_c, \quad y_0 = y - y_c, \quad z_0 = z - z_c \quad \cdots (4)$$

In Expression (4), the radius *r* of the cylinder and an image direction ($\theta$, $\varphi$) of the omnidirectional camera are associated with each other in the following manner. The angle of the vertical direction about the photography viewpoint is defined as $\varphi$, and the angle of the horizontal direction about the photography viewpoint is defined as $\theta$.

$$r = \sqrt{(x_0^2 + z_0^2)} \quad \cdots (5)$$

$$\phi = \arctan(r, h), \quad \theta = \arctan(z0, x0) \cdots (6)$$

On the basis of the correspondence relationship described above, texture mapping is conducted to create a tube-shaped virtual screen on which an image captured by the camera 112 at the photography viewpoint 212 is projected.

An omnidirectional image is displayed equally on the cylindrical virtual screen illustrated in FIG. 7A, which is effective when the position of a human or equipment is not known.

The virtual screen may contain a floor 750, and a part of the image may be projected on the floor 750. Only the relative angle ($\varphi$, $\theta$) from the three-dimensional photography viewpoint is required in the method described above, and thus the image may be projected at an intersection 702 between a line extended in the direction of the angle ($\varphi$, $\theta$) from the photography viewpoint 212 and the floor 750. The size of the virtual screen defines the range of projection of the entire peripheral image on the floor 750. For example, the size of the virtual screen may be set so that the range $\varphi<30°$, which is illustrated in FIG. 6, is projected on the bottom surface (floor 750) of the cylinder.

Further, the virtual screen may only be formed of the floor 750, and all the images may be projected on the floor 750. Also in this case, the image may be projected at the intersection 702 between the line extended in the direction of the angle ($\varphi$, $\theta$) from the photography viewpoint 212 and the floor 750. The image projected on the floor 750 extends in a wide range, and thus a circle having a predetermined radius may be defined on the floor 750 to project the image on the range.

Further, the virtual screen may have a shape other than a cylinder, and may have a tube shape with a polygonal bottom surface.

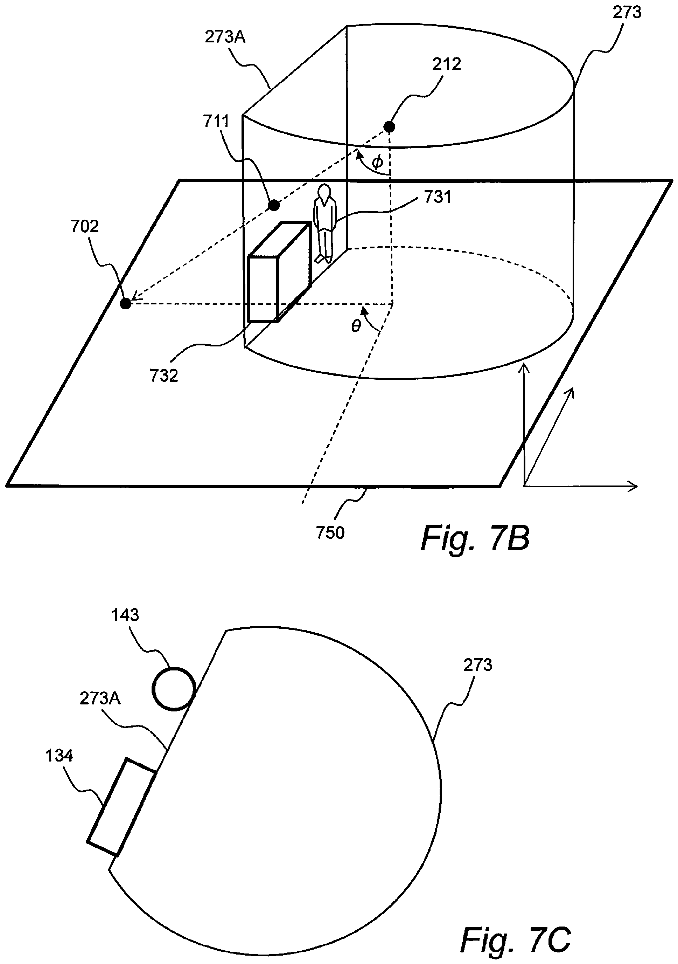

FIG. 7B is a diagram for illustrating an example of forming the virtual screen 273 in a cylindrical shape with a part of the side of the cylinder being a planar portion 273A and rendering an image captured by the omnidirectional camera on the inner surface of the virtual screen 273 according to the first embodiment. The rendered image is mapped to the inner surface of the cylinder, and is not rendered on the outer surface and top surface of the cylinder. The image may be rendered on the bottom surface of the cylinder.

Similarly to the virtual screen 272 illustrated in FIG. 7A, the tube-shaped geometric of the virtual screen 273 illustrated in FIG. 7B is rendered through approximation by 64-sided prisms and representation by triangle meshes, followed by linear interpolation of an image in each triangle mesh to reduce a distortion of the image. Then, on the basis of the correspondence relationship similar to that of the virtual screen 272 illustrated in FIG. 7A, texture mapping can be conducted to create a tube-shaped virtual screen on which an image captured by the camera 112 at the photography viewpoint 212 is projected.

For example, when a worker 143 and an equipment 134 are at positions illustrated in FIG. 7C, the virtual screen 273 is arranged so that the planar portion 273A is positioned at a place where the human and the equipment exist. Then, an image is projected to be mapped to an intersection 711 between the line extended in the direction of the angle ($\varphi$, $\theta$) from the photography viewpoint 212 and the planar portion 273A. Thus, an image 731 of the worker 143 is rendered on the planar portion 273A of the virtual screen 273, and an image 732 of the equipment 134 is rendered on the planar portion 273A of the virtual screen 273.

The cylindrical virtual screen with a part of the side being the planar portion 273A, which is illustrated in FIG. 7B, is effective when humans and equipment exist on the planar portion 273A of the side. In other words, the cylindrical virtual screen is effective when the planar portion 273A is arranged at a position where humans and equipment exist. For example, the surface of the virtual screen may be formed to cover the positions of equipment and an operator of the equipment existing in the real space 100. This is because sizes of objects (humans and equipment) existing in the planar portion of the virtual screen can be grasped correctly, and those objects are displayed at positions on the floor 750 (not displayed at positions floating above the floor 750).

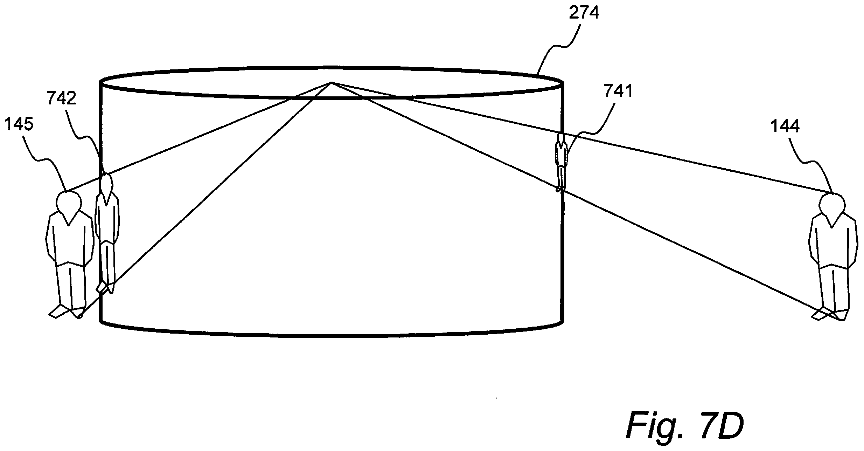

With reference to FIG. 7D, a description is given of a position on the virtual screen at which an image is projected. For example, when a worker 144 exists at a position far from the surface of the virtual screen 274, an image 741 of the worker 144 is displayed in a small scale on the screen. On the other hand, when a worker 145 exists at a position close to the surface of the virtual screen 274, an image 742 of the worker 145 is displayed in substantially the same scale as that of surrounding 3D models.

Thus, in a case where the positions of humans and equipment to be displayed on the virtual screen are known in advance, images of objects to be displayed can be viewed in an appropriate size by setting the surface of the virtual screen so that the surface passes through the positions of the objects to be displayed.

In FIG. 7B, the cylindrical virtual screen with a part of the side being a plane portion is illustrated. However, the virtual screen may have two or more planar sides. Further, all the sides of the virtual screen may be a plurality of planar sides.

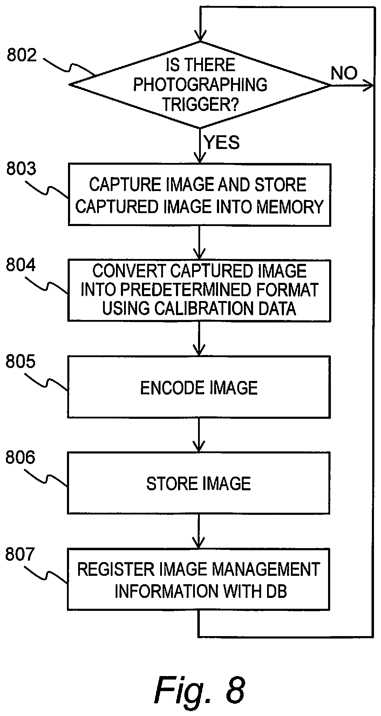

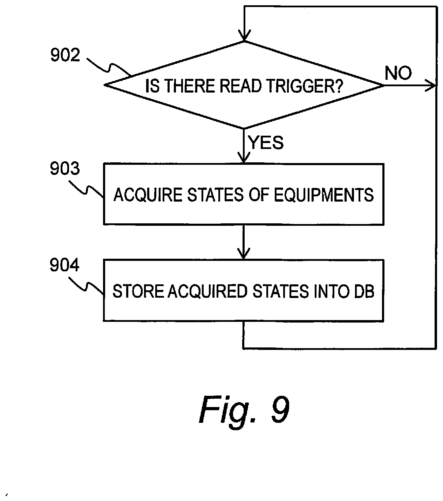

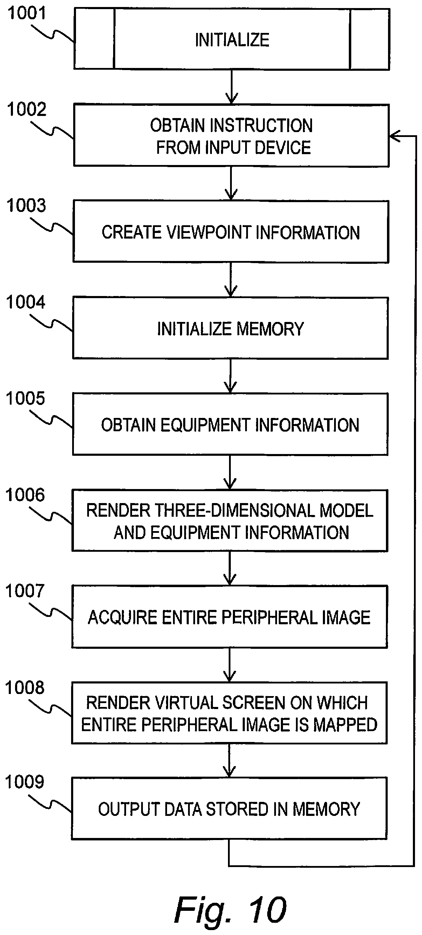

Now, a description is given of operation of the system according to the first embodiment with reference to FIG. 8 to FIG. 12. The operation of the system includes three routines, namely, a photographing routine by the camera, which is illustrated in FIG. 8, an equipment information collection routine, which is illustrated in FIG. 9, and an information display routine, which is illustrated in FIG. 10. Routines of FIG. 8 and FIG. 9 are processing to be executed repeatedly at a predetermined timing.

In the photographing routine illustrated in FIG. 8, the cameras 111 and 112 capture an image repeatedly at a predetermined timing (e.g., periodically).

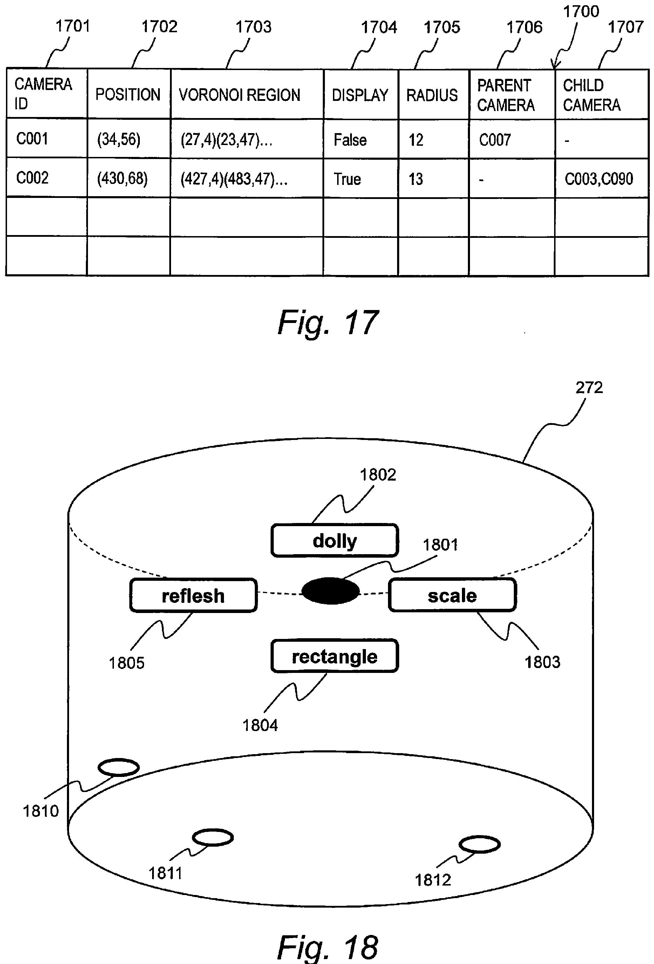

First, the cameras 111 and 112 determine whether or not there is a photographing trigger at a predetermined timing (e.g., predetermined time interval) (Step 802). The photog photographing raphy trigger is detected, for example, when a predetermined period of time is counted by a timer, or when a photography instruction is input from the outside. For example, in a case where the user desires to view a current image, the user operates a marker 1805 illustrated in FIG. 18, and the image generation device 302 transmits a photographing instruction to the specified cameras 111 and 112.

Then, in a case where it is determined that a photographing trigger is detected, an image is captured and the captured image is stored into an internal memory (Step 803). Then, a calibration table is used to convert the captured image into a predetermined format (e.g., format illustrated in FIG. 6) (Step 804), and the converted image is encoded and compressed (Step 805). Then, the encoded image is stored into the database 304 (Step 806). Further, the image management information such as an ID number and photographing time of the camera used for photography is registered with the database 305 (Step 807).

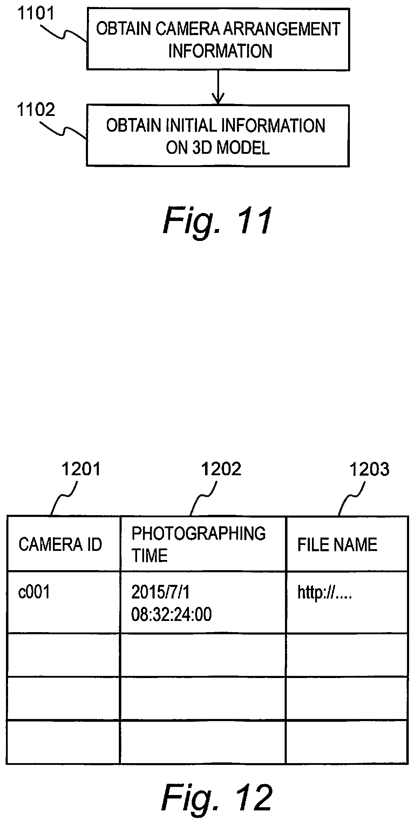

FIG. 12 is a diagram for illustrating an example of the image management information according to the first embodiment.

The image management information in the first embodiment contains identification information 1201 for uniquely identifying the camera, and a date and time 1202 at which the image is captured, and a file name 1203 of an image stored in the database 304.

In the equipment information collection routine illustrated in FIG. 9, the equipments 131 to 133 output states of those equipments at a predetermined timing repeatedly (e.g., periodically).

First, the equipments 131 to 133 determine whether or not a read trigger is activated at a predetermined timing (e.g., predetermined time interval) (Step 902). The read trigger is activated, for example, when a predetermined period of time is counted by a timer, or when a read instruction is input from the outside. For example, in a case where the user desires to know the current states of equipment, the image generation device 302 transmits a read instruction to the specified equipments 131 to 133.

Then, in a case where it is determined that the read trigger is detected, the equipments 131 to 133 acquire states of the equipments 131 to 133 (Step 903), and store the acquired values into the database 306 via a network (Step 904). States stored into the database 306 can be defined in various ways by the types and configurations of equipment. For example, the states are the number and weight of items stored in the racks, a number by which each item has increased or decreased, the number of times of activation of equipment, the number of times the equipment has been used at each fixed time period, the remaining battery power, and the temperature of equipment.

FIG. 10 is a flowchart of the information display routine according to the first embodiment. In the information display routine illustrated in FIG. 10, the captured camera image and the states of equipment are projected on a 3D map to create an image.

First, the image generation device 302 executes initialization processing of reading a control program for a 3D image and information on the 3D image stored in the auxiliary storage unit 405 in advance (Step 1001).

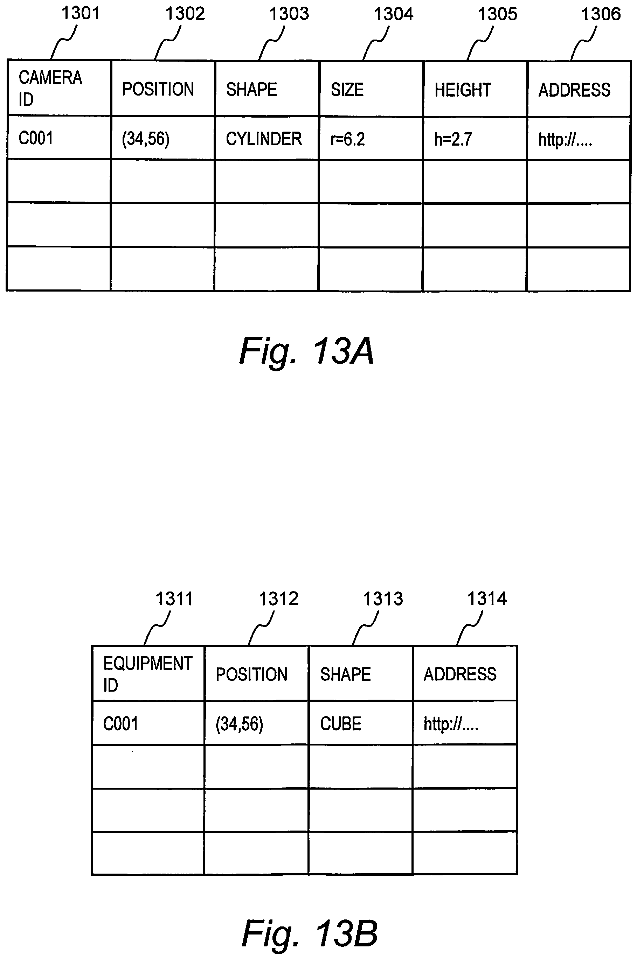

Details of the initialization processing are illustrated in FIG. 11. First, the image generation device 302 accesses the database 305 via the network 301, and acquires camera arrangement information (Step 1101). An example of the configuration of the camera arrangement information is shown in FIG. 13A. The camera arrangement information contains identification information 1301 for uniquely identifying the cameras 111 and 112, information 1302 on positions where the cameras 111 and 112 are installed, an initial value 1303 of the shape of the virtual screen on which images captured by the cameras 111 and 112 are projected, a size 1304 and a height 1305 of the virtual screen on which the image is projected, and an address 1306 for accessing the cameras 111 and 112. In a case where the cameras 111 and 112 have a web server function, it is desired that a URL for accessing the web server be described in the address 1306.

Referring back to FIG. 11 for description, the image generation device 302 accesses the database 306 via the network 301, and acquires equipment installation information (Step 1102). An example of the configuration of equipment arrangement information is shown in FIG. 13B. The equipment installation information contains identification information 1311 for uniquely identifying the equipments 131 to 133, information 1312 on positions at which the equipments 131 to 133 are installed, a shape 1313 of each of the equipments 131 to 133, and an address 1314 for accessing the equipments 131 to 133. In a case where electronic devices accompanying the equipments 131 to 133 have a web server function, it is desired that a URL for accessing the web server be described in the address 1314.

Referring back to FIG. 10 for description, after the initialization processing is finished (Step 1001), periodical image update processing is conducted. In the periodical image update processing, data input to the input device 308 is received (Step 1002), and a viewpoint position at which the virtual space is observed is corrected in accordance with the received data, to thereby create viewpoint information (Step 1003). Specifically, in Step 1003, the position and direction of the viewpoint in the virtual space for observing a three-dimensional model is defined, and a $4 \times 4$ transformation matrix for projecting a three-dimensional point $p_3$ in the virtual space into a point $p_2$ on a two-dimensional screen is set. In the first embodiment, a view matrix $V$ for transforming the position and angle of the viewpoint into a three-dimensional coordinate system and a projection matrix $P$ for transforming the three-dimensional coordinate system into a two-dimensional coordinate system are defined to convert a three-dimensional point as represented in Expression (7). In Expression (7), $P$ and $V$ are $4 \times 4$ transformation matrices, $p_3$ is a four-dimensional vector for representing a three-dimensional point by three-dimensional representation, and $p_2$ is a four-dimensional vector for representing the position on the two-dimensional image by three-dimensional representation. Methods widely used in known technologies, for example, OpenGL, may be used to perform processing of transforming a three-dimensional point with such a matrix.

$$p_2 = PVp_3 \quad \cdots (7)$$

Next, the main memory unit 404 secures a two-dimensional image region for displaying an image, and initializes the secured two-dimensional image region (Step 1004). A two-dimensional image stored in the two-dimensional image region is formed of two-dimensional matrices referred to as pixels, and each pixel contains color information (e.g., RGB).

Then, information output from each equipment is acquired (Step 1005). Specifically, character strings (e.g., numerical values) associated with the equipments 131 to 133 are read from the database 306.

Then, on the basis of the read information, the three-dimensional models 231 to 233 are rendered by changing the color of the corresponding object (Step 1006). For example, the three-dimensional model is rendered in red when the read numerical value is larger than a threshold value 1 defined in advance, rendered in green when the read numerical value is smaller than a threshold value 2 defined in advance, or rendered in yellow when the read numerical value is between the threshold value 1 and the threshold value 2. In the first embodiment, the three-dimensional model is represented by a rectangular parallelepiped, and the rectangular parallelepiped is stored into a two-dimensional image region of the main memory unit 404 as a data structure of a set of triangles. This data structure is formed of vertex data on a triangle and order data connecting three vertices forming each surface. Each vertex of the triangle is transformed into a point on the two-dimensional image using Expression (7), and a triangle connecting the vertices is colored in a color defined as the color of the three-dimensional model.

At this time, this color information may be shaded depending on a specific light source condition or subjected to translucence processing of blending this color information with an already rendered background for rendering. Methods widely used in known technologies, for example, OpenGL, may be used as a method of shading or translucence processing. Further, the character strings 251 to 253 read from the database 306 are rendered at positions near the three-dimensional models 231 to 233. In the following, the rendered character strings are referred to as text captions.

Then, images captured by the cameras 111 and 112 are acquired (Step 1007). For example, the database 305 is searched to retrieve images captured by the cameras 111 and 112, and the file names 1203 of images having the latest photographing time 1202 are acquired. Next, images of the acquired file names are read from the database 304 and loaded into the main memory unit 404 so that those images can be referred to as texture images.

Next, a three-dimensional model is rendered on the virtual screen (Step 1008). In the first embodiment, as illustrated in FIG. 7A to FIG. 7D, the virtual screen is represented by a planar shape of the floor 750 and a cylindrical shape 700. This floor 750 and the cylindrical shape 700 are stored into the two-dimensional image region of the main memory unit 404 as a data structure of a set of triangles. This data structure is formed of vertex data on a triangle, order data connecting three vertices forming each surface, and texture mapping data representing the correspondence relationship between each vertex and a texture image. Each vertex of the triangle is transformed into a point on the two-dimensional image using Expression (7), and the triangle connecting the vertices is painted by the designated texture.

In the first embodiment, methods commonly used as rasterization of the scanline method can be used as processing of painting the region of triangle meshes with reference to texture color information. Specifically, a pixel existing inside a triangle connecting three points, which are obtained by transforming respective vertices of the triangle onto the two-dimensional image, is selected, and texture coordinates of the selected pixel are acquired by line interpolation of texture coordinates of the three points. The color of the position of the interpolated texture coordinates is set as the color of the pixel. This processing is repeated for all the triangles.

At this time, this color information may be shaded depending on a specific light source condition or subjected to translucence processing of blending this color information with an already rendered background for rendering. Methods widely used in known technologies, for example, OpenGL, may be used as a method of shading or translucence processing.

Further, in rendering of the triangle, whether or not to display the triangle may be determined separately for the front surface and the back surface, or the front surface and the back surface may be rendered in different degrees of transparency. In the first embodiment, an image is rendered on the inner surface of the cylinder, and an image is not rendered on the outer surface of the cylinder.

Further, in the format of the texture image in the first embodiment, which is illustrated in FIG. 6, an image is transformed into a non-linear shape. Thus, it is desired to hold a three-dimensional model that is divided more finely than in triangulation used for normal rendering in order to improve the accuracy of calculating texture coordinates by linear interpolation processing.

Then, an image rendered in Step 1006 and an image rendered in Step 1008 are output to the output device 303 (Step 1009). Through repetition of Step 1002 to Step 1009, the user can check a plurality of entire peripheral images arranged on the three-dimensional map in a panoramic view.

As described above, according to the first embodiment of this invention, the image generation device 302 arranges a three-dimensional model of an object existing in the real space 100 in the virtual three-dimensional space 200, maps an entire peripheral image captured at a predetermined photographing position to a tube-shaped virtual screen containing the photographing position, arranges the virtual screen in the virtual three-dimensional space, and generates image data for displaying, in a panoramic view, the virtual three-dimensional space in which the three-dimensional model and the virtual screen are arranged. Therefore, it is possible to arrange the entire peripheral image in the virtual three-dimensional space in an easy-to-grasp manner.

Further, the virtual screen has a cylindrical shape, and thus it is possible to map the entire peripheral image to the virtual screen with a small distortion.

<Second Embodiment

In a second embodiment of this invention, a description is given of a calculation method for arranging the cylindrical virtual screen. In the second embodiment, only the configuration and processing different from those of the first embodiment are described, and a description of the same configuration and processing is omitted.

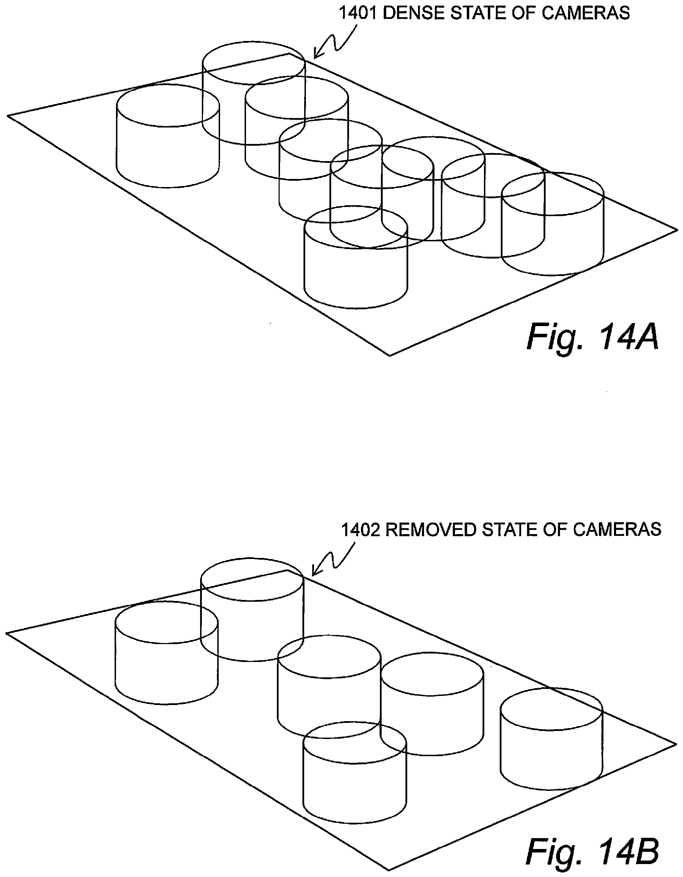

FIG. 14A and FIG. 14B are diagrams for illustrating arrangement of cameras for capturing the entire peripheral image and arrangement of the virtual screen.

As illustrated in FIG. 14A, when virtual screens are densely arranged (Step 1401), cylinders overlap with one another to result in display mode that is difficult to see. However, as illustrated in FIG. 14B, when a part of the cameras is set to a non-display mode, some virtual screens are removed and remaining virtual screens are arranged (Step 1402). In this manner, in the second embodiment, a description is given of a method of automatically calculating the radius of the cylindrical virtual screen by selecting an appropriate number of cameras for representation on the virtual screen from a set of camera positions registered in advance.

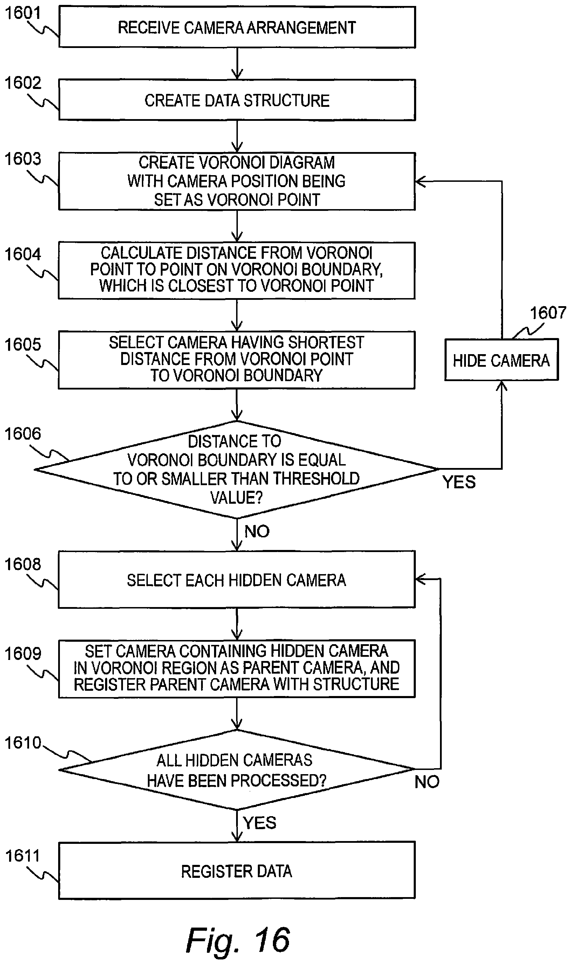

The hardware configuration in the second embodiment is the same as that of the first embodiment, which is illustrated in FIG. 1 and FIG. 3. The difference between the second embodiment and the first embodiment is that processing of registering the positions of cameras with the database 305 by those cameras, which is illustrated in FIG. 16, and processing of dynamically generating arrangement information on cameras to be transmitted to the image generation device 302 from the database 305 are added. In the second embodiment, each camera 501 has a function of recognizing its own position, and includes the network connection unit 513 for accessing the database 305. Known methods of using the GPS or using signals from Wi-Fi access points or beacons can be used as the function of recognizing its own position. Alternatively, a method of manually inputting the position of the camera 501 may be employed.

In the second embodiment, when an omnidirectional camera is installed in the real space 100, each camera performs its initial setting. In this initial setting, the camera uses the GPS to acquire its own positional information, accesses the database 305 via the network 301, and stores the positional information, a unique ID of the camera, and an address for access via the network into the database 305.

In the initialization processing (Step 1001), the image generation device 302 reads settings of the camera from the database 305. In the first embodiment, the user manually creates data on the position and size of a cylinder representing the entire peripheral image, and the created data is registered with the auxiliary storage unit 405 in advance. In the second embodiment, through the processing illustrated in the flowchart of FIG. 16, a camera for displaying an image is selected from among the cameras 501 registered with the database 305, and the size of the radius of a cylinder to be displayed as the virtual screen is adjusted. In the following, a description is given in detail of the processing.

First, the positional information on each camera is acquired from the database 305 (Step 1601), and a data structure 1700 shown in FIG. 17 is created (Step 1602).

The data structure 1700 contains identification information 1701 for identifying the position of a camera, a position 1702 of the camera, and information 1703 on a Voronoi region with the position of the camera being set as a Voronoi point. The Voronoi region is described as an array of vertices, which is defined to be a region connecting those vertices so that the camera is closest to points contained in the region among the cameras. Further, the data structure 1700 contains a flag 1704 indicating whether or not to use the camera for display of the initial state. Specifically, in a case where the camera is used for display of the initial state, "True" is set to the flag 1704. On the other hand, in a case where the camera is not used for display of the initial state, "False" is set to the flag 1704. The initial state of the flag 1704 is "True".

When the data structure 1700 is created, a value $R1$ defined as the initial value in advance is stored as a radius 1705. Next, the created data structure 1700 is referred to create a Voronoi diagram with a point having "True" as the flag 1704 being set as a Voronoi point (Step 1603). Then, a distance from the Voronoi point to a point on the Voronoi boundary, which is closest to the Voronoi point, is calculated for the Voronoi region of each camera, and the value is stored as the radius 1705 (Step 1604).

Next, unnecessary cameras are deleted. For deletion, a camera point having the smallest radius 1705 is selected from among camera points (Step 1605). In a case where the radius value is smaller than the threshold value $R1$ stored in advance as a constant (YES in Step 1606), the flag 1704 is set to "False" to hide the camera (Step 1607). Then, a Voronoi diagram is created again for a camera whose flag 1704 is "True", and Steps 1603 to 1606 are repeated. In a case where radii of all the cameras are larger than the initial value $R1$ (NO in Step 1606), the processing proceeds to Step 1608.

Next, a parent camera is set for a hidden camera whose flag 1704 is set to "False" (Step 1608). Identification information on a camera forming a Voronoi region, which contains the installation position of the hidden camera, is stored as the parent camera 1706. Further, identification information on the hidden camera is stored into the child camera 1707 of data on the camera selected as the parent camera.

The flag 1704 may not be used, and the radius 1705 of a camera to be hidden may be set to 0.

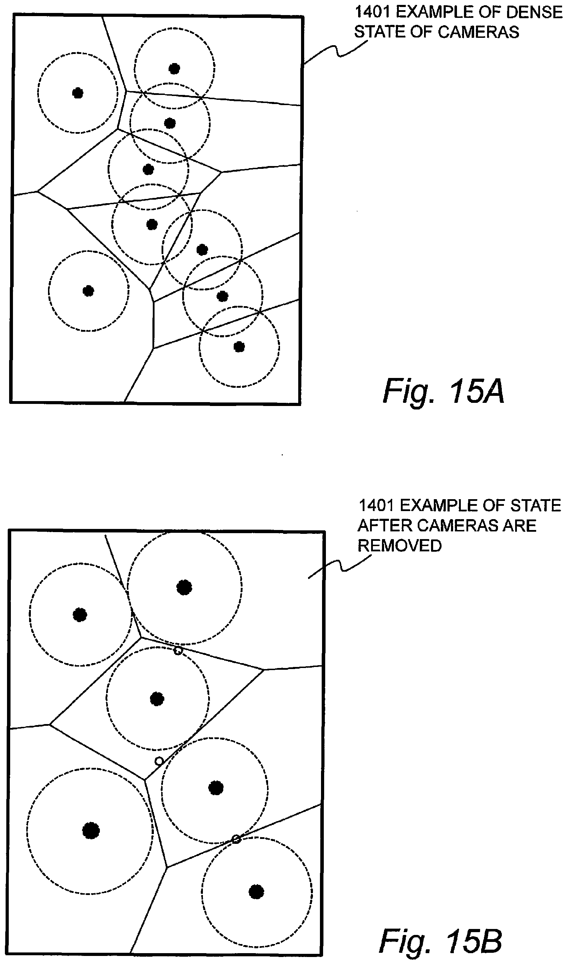

When a group of cameras obtained by the processing described above are used, cameras can be arranged so that virtual screens do not overlap with each other as illustrated in FIG. 15A and the Voronoi region has a predetermined size or more as illustrated in FIG. 15B. Further, the value stored as the radius 1705 is used as a radius value of the virtual screen, to thereby be capable of avoiding overlap between the virtual screens.

Further, a value obtained by multiplying the value stored as the radius 1705 by a constant smaller than 1.0 is used as the radius value of the virtual screen, to thereby be capable of securing spacing between virtual screens and displaying the virtual screens more visibly.

Further, the upper limit value of the radius is set to R2 and a smaller one of values of R2 and the radius 1705 is used as the radius value of a virtual screen, to thereby be capable of decreasing a deviation of sizes of the virtual screens and displaying the virtual screens more visibly.

As described above, according to the second embodiment of this invention, the image generation device 302 arranges, in the virtual three-dimensional space, cylindrical virtual screens having radii that prevents overlap between the virtual screens in the virtual three-dimensional space, and thus entire peripheral images mapped to the virtual screens do not overlap with each other, and can be displayed in high visibility.

<Third Embodiment

In a third embodiment of this invention, user interaction using a three-dimensional maker arranged in the photographing position of the camera is described. In the system according to the third embodiment, it is possible to change the viewpoint position for rendering a three-dimensional model, modify the virtual screen on which an entire peripheral image is projected, and select an entire peripheral image. In the third embodiment, only the configuration and processing different from those of the embodiments described above are described, and a description of the same configuration and processing is omitted.

The hardware configuration in the third embodiment is the same as that of the first embodiment, which is illustrated in FIG. 1 and FIG. 3. A common pointing device, for example, a mouse, is used as the input device 308 for the image generation device 302. In general, the operating system provides a mouse with means for sensing operation such as a click and a drag for specifying a position in an image and executing a callback sub-routine registered by an application. Known methods can be used as means for implementing this callback function. In the following description of the third embodiment, known methods are used as processing from detection of a drag with a mouse until calling of the callback function.

In the third embodiment, a description is given of a procedure of setting the position and angle of a virtual viewpoint for viewing the virtual space 200. In the third embodiment, a method referred to as a target camera, which defines the position and angle of the virtual viewpoint with three-dimensional coordinates $U1$ serving as a center (position of photographic subject) of the visual field and three-dimensional coordinates $U2$ serving as the position of the virtual viewpoint (camera). A translation matrix T centered around $U2$ and a rotation matrix $R$ with the direction from $U1$ to $U2$ being set to the line-of-sight direction (Z-axis) of the camera. The view matrix $V$ is defined by a product $V=RT$ of the matrices. Such a method of setting the viewpoint position is a method generally known as the target camera. In the following description, $U1$ is referred to as a point of focus, and $U2$ is referred to as a virtual viewpoint. Further, a distance $|U2-U1|$ between $U2$ and $U1$ is referred to as a target camera distance d. A generally known method can be adopted as calculation processing of defining the viewpoint position $U2$ to create the view matrix $V$ using the angle $R$, the target camera distance $d,$ and the point of focus $U1$ as input.

A three-dimensional marker is arranged inside or near each virtual screen. FIG. 18 is a diagram for illustrating an example of user interaction to be displayed on the cylindrical virtual screen 272 in the third embodiment.

A marker 1801 is arranged at a camera photographing position of the virtual screen 272, and markers 1802 to 1805 are arranged around the marker 1801. Further, the child camera 1707 set to a non-display mode by the operation of the second embodiment is selected, and markers 1810 to 1812 are arranged at the installation positions 1702 of the child cameras.

In a case where the markers 1802 to 1805 are operated with the input device (mouse) 308, an event function described below is executed.

<Movement of Viewpoint Center through Selection>

In a case where operation of the marker 1801 is detected, the position of the point of focus $U1$ is matched with the photographing position of the corresponding virtual screen 272. With this operation, the virtual screen 272 is the center of the image. Movement of this camera viewpoint may be displayed by animation that changes the image continuously.

<Change in Viewpoint Distance>

In a case where drag operation with the marker 1802 serving as the start point is detected, the target camera distance $d$ is changed. For example, when upward drag operation by $A$ pixels is detected, movement of the camera by the target camera distance $d$ may be displayed by animation that changes the image continuously. Under a condition of the target camera distance $d$ being close to 0, an angle of field of the screen and an angle of field of the camera are substantially equal to each other, and thus the image is almost the same as an image obtained by cutting out a part of the entire peripheral image is displayed.

<Adjustment of Size of Screen>

When drag operation with the marker 1803 serving as a start point is detected, the radius of the corresponding virtual screen is changed. For example, when upward drag operation by $A$ pixels is detected, the display radius $r$ of the virtual screen 272 is changed to $r\times(100+A)/100$.

<Change in Screen Shape>

When operation of the marker 1804 is detected, the virtual screen 272 is changed to be a quadrangular prism. After operation of the marker 1804, a sub screen for selecting the shape of the changed virtual screen may be displayed.

<Acquisition of Real-time Image>

When operation of the marker 1805 is detected, the image generation device 302 transmits a photographing instruction to the specified cameras 111 and 112. The cameras 111 and 112 receive a photographing instruction, capture images, and store the images into the database 304 after predetermined processing. The image generation device 302 acquires the images which is designated by photographing instruction and stored in the database 304, to thereby be capable of displaying the latest image on the virtual screen 272.

When operation of the marker 1805 is detected, a read instruction may be transmitted to the equipments 131 to 133 in addition to a photographing instruction to the cameras 111 and 112.

<Change of Entire Peripheral Image>

Further, each of the markers 1810 to 1803 may be arranged at an installation position of a child camera that is set to a non-display mode by operation in the second embodiment. When operation of the markers 1810 to 1803 is detected, the virtual screen 272 is displayed around the position of the selected child camera, and an entire peripheral image captured by the selected child camera is rendered on the virtual screen 272.

In the third embodiment, a callback function by operation of a marker can change the image to be rendered on the virtual screen.

As described above, according to the third embodiment of this invention, the image generation device 302 generates image data for displaying at least one marker in the virtual three-dimensional space near the photographing position, the shape of the virtual screen or an entire peripheral image to be mapped to the virtual screen is changed when operation of the marker is detected, and thus it is possible to display an image that the user desires to view in accordance with operation by the user.

Further, according to the third embodiment, the marker serves as the marker 1801 to be operated to switch to an entire peripheral image at a different photographing position, and thus it is possible to display an entire peripheral image that is viewed at a different position. Further, the marker also serves as the marker 1802 to be operated to change the viewpoint distance in the virtual three-dimensional space, and thus it is possible to display an entire peripheral image that is viewed at a different position and in a different size. The marker also serves as the marker 1803 to be operated to change the size of the virtual screen, and thus it is possible to display an entire peripheral image in a different size. The marker also serves as the marker 1804 to be operated to change the shape of the virtual screen, and thus it is possible to display an entire peripheral image at a different position for observation. The marker also serves as the marker 1805 to be operated to update the entire peripheral image to the latest image, and thus it is possible to display the latest image.

<Fourth Embodiment

In a fourth embodiment of this invention, a description is given of a method of operating a device for capturing an entire peripheral image existing in the real space 100 by the viewer interacting with a display marker on the three-dimensional map. In the fourth embodiment, only the configuration and processing different from those of the embodiments described above are described, and a description of the same configuration and processing is omitted.

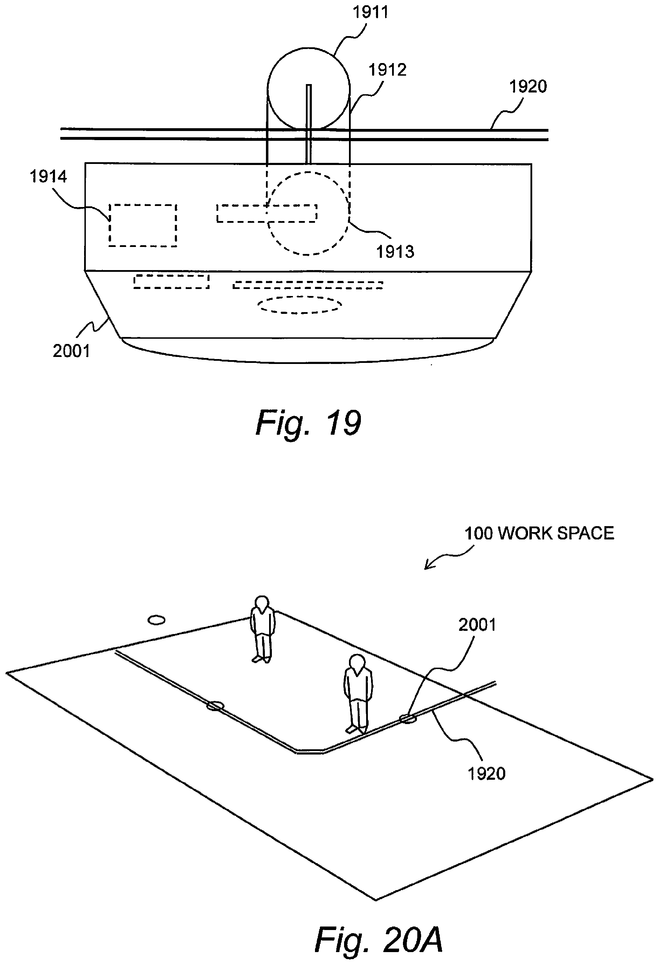

A basic hardware configuration in the fourth embodiment is the same as that of the first embodiment, which is illustrated in FIG. 1 and FIG. 3, except the camera 112. In the fourth embodiment, a camera 2001 with a physically movable function is used instead of the camera 112. FIG. 19 is a diagram for illustrating a configuration of the camera 2001 to be used in the fourth embodiment.

The camera 2001 includes a wheel 1911, a power transmission mechanism 1912, and a motor 1913 in addition to the configuration of a camera illustrated in FIG. 5A and FIG. 5B, and has a function of moving along the rail 1920 by driving the motor 1913 to rotate the wheel 1911. Further, the arithmetic control unit 514 controls a voltage or a current via the motor control unit 1914, to thereby be capable of driving the motor 1913.

FIG. 20A is a diagram for illustrating the work space 100 in the fourth embodiment. A movable range of the camera 2001 depends on the rail 1920.

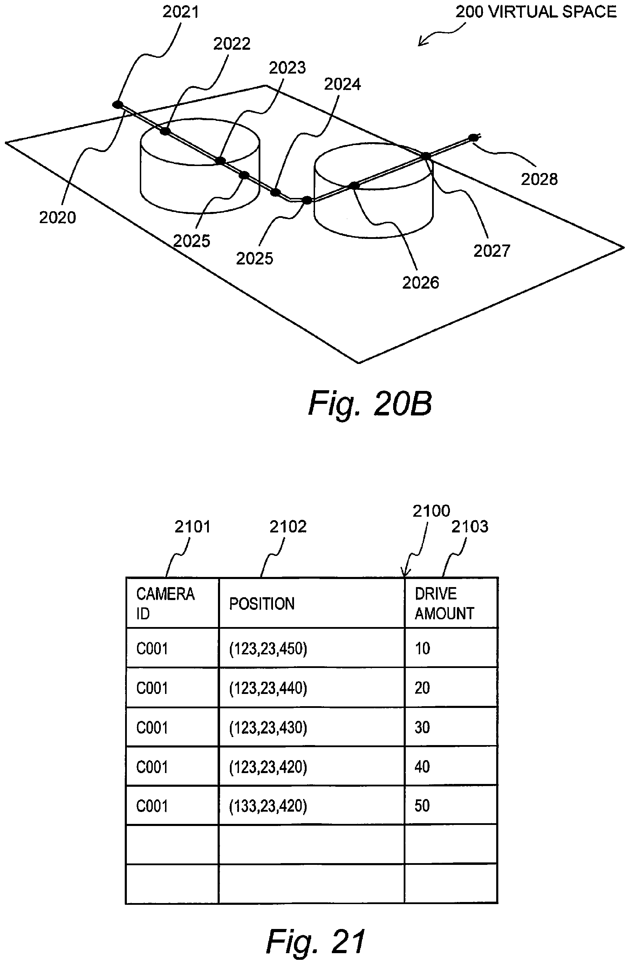

FIG. 21 is a diagram for illustrating a data structure 2100 that stores a movable path of the camera.

The data structure 2100 contains identification information 2101 for uniquely identifying a camera, a position (movement destination) 2102 of the camera, and a drive amount 2103 of the motor 1913 necessary for the camera to move from a predetermined start point to the position. Each data of the data structure 2100 corresponds to a point of passage on the rail 1920 on which the camera 2001 identified by the identification information 2101 is installed. It is desired that the data structure 2100 be registered with the database 305 in advance and a record be retrieved by specifying the value of the camera ID 2101.

The camera 2001 has a function of receiving a moving instruction and a photographing instruction via the network 301 for operation. The camera 2001 has a unique IP address, and when receiving a message at a predetermined port, drives the motor 1913 by a predetermined amount and returns a response message to a message transmission source. The camera 2001 is an example of a movable camera, and may be a camera that does not move along the rail and travels on the floor by itself. Such a movement mechanism of the camera can be implemented by a combination of known technologies.

In initialization processing (Step 1001), the image generation device 302 acquires information on the current location of the camera 2001 and acquires the information 2100 on the movable path. Then, as illustrated in FIG. 20B, this information is used to render a locus 2020 for allowing movement of the camera 2001 on the screen (Step 1006).

FIG. 20B is a diagram for illustrating an example of displaying the virtual space 200 to be represented by the system according to the fourth embodiment. When the user specifies markers 2021 to 2029 for indicating points on a path on which the camera 2001 is movable through operation of the mouse, a message for instructing movement and photography of the camera is transmitted to the camera 2001. The camera 2001 moves to a specified location, captures a surrounding image, and stores the surrounding image into the database 305.

The camera 2001 may capture the entire peripheral image while moving. In this case, it is desired that the marker be displayed at the position at which the entire peripheral image is captured.

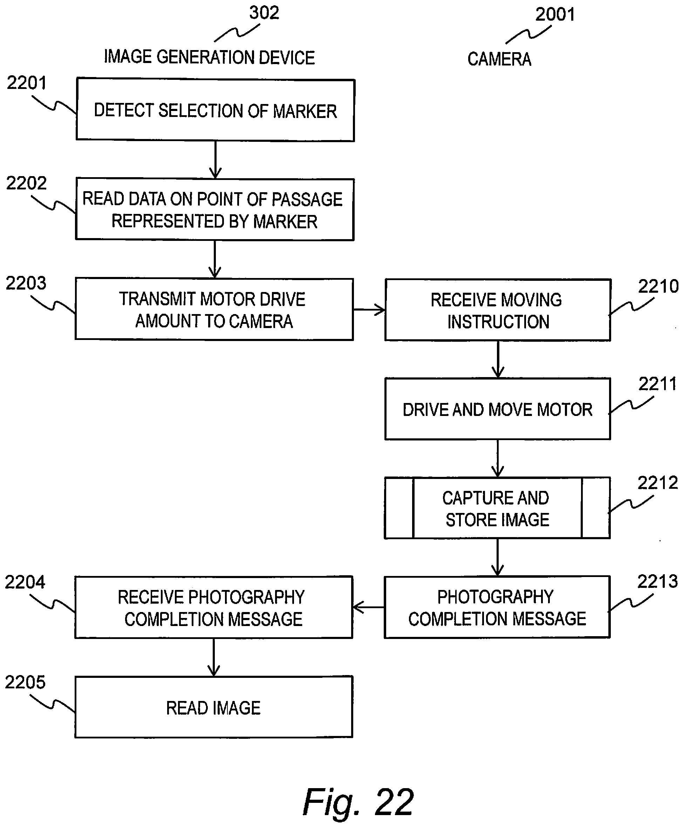

FIG. 22 is a flowchart of processing of moving and photographing by the camera 2001.

When the image generation device 302 detects selection of a point of passage (marker) (Step 2201), the image generation device 302 reads data on the point of passage indicated by the selected marker from the data structure 2100 (Step 2202), transmits the drive amount 2103 acquired from the data structure 2100 to the camera 2001, and instructs movement of the camera (Step 2203).

When receiving a moving instruction, the camera 2001 drives a motor (Step 2211), moves to the position of the selected marker, captures a surrounding image, and stores the captured image into the database 305 (Step 2212). The captured image is compressed and registered in the database in the same manner as in Step 802 to Step 807 of the first embodiment. After the completion of photography, the camera 2001 transmits a photography completion message to the image generation device 302 (Step 2213).

When the image generation device 302 receives the photography completion message (Step 2204), the image generation device 302 reads an image from the database 305, moves the virtual screen to a new photographing position, and displays an image (Step 2205).

In the fourth embodiment, the position of the camera and a photographing time are contained in the image management information to be stored into the database 305. Then, when the user selects a marker, the image generation device 302 may search the database 305 for the latest image captured at the position of (or position closest to) the selected marker, acquire the retrieved image from the database 304, and display the acquired image on the virtual screen. At this time, a virtual screen centered around the position of the selected marker may be newly displayed. Further, the viewpoint may move to the position of the selected marker.

Further, the image generation device 302 may search the database 305 for an image captured at the time of (or time closest to) input by the user, acquire the retrieved image from the database 304, and display the acquired image on the virtual screen corresponding to the photographing position. At this time, a virtual screen corresponding to the photographing position may be newly displayed. Further, the viewpoint may be moved to the center of the virtual screen corresponding to the photographing position.

As described above, according to the fourth embodiment of this invention, the image generation device 302 transmits a moving instruction and a photographing instruction to the camera 2001, the camera 2001 moves to a place specified by the moving instruction to capture the entire peripheral image at the destination place, and the image generation device 302 acquires the captured entire peripheral image. Therefore, it is possible to display a current image of the position desired to be viewed by the user.

Further, the image generation device 302 acquires the entire peripheral image captured at the time specified by the user from the database 304, and maps the acquired entire peripheral image on the virtual screen. Therefore, it is possible to display an image at a time desired to be viewed by the user.

Further, when the image generation device 302 detects selection of a position in the virtual three-dimensional space, the image generation device 302 generates a virtual screen containing the selected position, maps the entire peripheral image to the generated virtual screen, and arranges the generated virtual screen in the virtual three-dimensional space. Therefore, it is possible to display the current image of the position desired to be viewed by the user.

Further, the image generation device 302 generates image data for displaying the markers 2021 to 2029 for instructing movement of the camera 2001 in the virtual three-dimensional space, the camera 2001 transmits a moving instruction and a photographing instruction to the camera 2001 when selection of one of the markers 2021 to 2029 is detected. Therefore, it is possible to move the camera in accordance with the intention of the user.

<Fifth Embodiment

In a fifth embodiment of this invention, a description is given of a method of displaying a three-dimensional model displayed in the virtual space 200 and an image displayed on the virtual screen in the virtual space 200 in association with each other. In the fifth embodiment, only the configuration and processing different from those of the embodiments described above are described, and a description of the same configuration and processing is omitted.

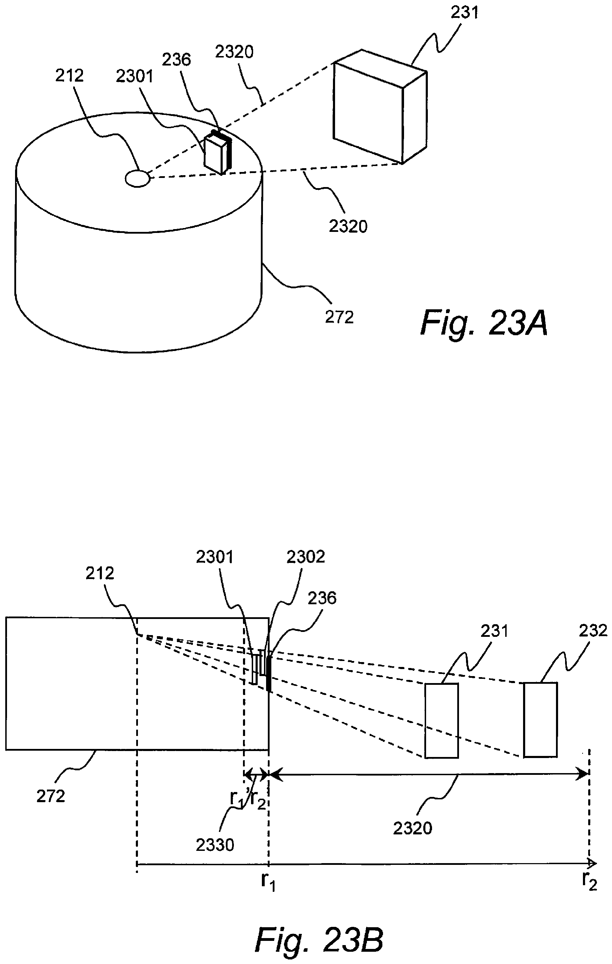

In the first embodiment, states of the equipments 131 to 133 existing in the real space 100 are displayed by the color of the three-dimensional model rendered in the virtual space 200 and text captions. However, in the method of the first embodiment, positions of the three-dimensional models 231 to 233 rendered in the virtual space 200 and the position of the entire peripheral image rendered on the virtual screen are usually different from each other, and are the same as each other when the photographing position and the photographing position of the image rendered on the virtual screen are equal to each other. Thus, in the fifth embodiment, as illustrated in FIG. 23A, it is possible to intuitively display a correspondence relationship between the entire peripheral image and the three-dimensional map in an easy-to-grasp manner by rendering the same three-dimensional model 2301 as the specific three-dimensional model 231 in the virtual space 200 at the position at which the image of the equipment is rendered in the virtual screen 272.

The hardware configuration in the fifth embodiment is the same as that of the first embodiment, which is illustrated in FIG. 1 and FIG. 3.

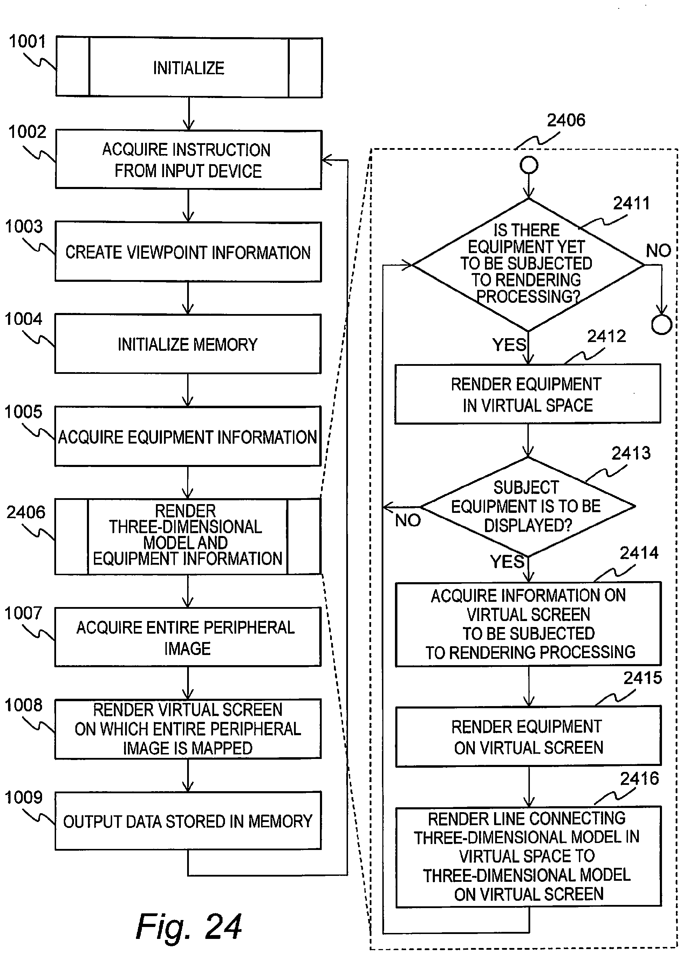

FIG. 24 is a flowchart of the information display routine according to the fifth embodiment.

In the fifth embodiment, the processing (Step 2406) of rendering the three-dimensional model and the equipment information is different from that of the first embodiment. In Step 2406, similarly to the first embodiment, the three-dimensional model of the equipment is rendered in the virtual space 200 (Step 2412), and is also rendered on the virtual screen 272 (Step 2415).

Specifically, first, the image generation device 302 determines whether or not there is a piece of equipment for which the rendering processing is not conducted yet among pieces of equipment contained in the virtual space 200 (Step 2411). Then, the image generation device 302 selects one piece of equipment for which the rendering processing is not conducted yet, and renders a three-dimensional model of the selected piece of equipment in the virtual space 200 (Step 2412).

Then, the image generation device 302 determines whether or not the selected piece of equipment is to be displayed on a virtual screen closest to the photographing position (Step 2413). For example, the image generation device 302 may determine whether or not the size of the piece of equipment to be displayed on the virtual screen is equal to or larger than a predetermined value.

Then, in a case where the image generation device 302 determines that the piece of equipment is to be displayed on the virtual screen, the image generation device 302 accesses the database 305, acquires camera arrangement information shown in FIG. 13A, and extracts information on the virtual screen for which the rendering processing is to be conducted (Step 2414). The image generation device 302 selects, as the virtual screen for which the rendering processing is to be conducted, a virtual screen closest to the viewpoint in a forward direction (line-of-sight direction) of the viewpoint. In a case where the user interface described in the third embodiment is used in combination, it is desired that the marker 1801 be operated to specify and select a virtual screen.

Then, the three-dimensional model of the equipment is rendered on the virtual screen (Step 2415).

After that, a line connecting two three-dimensional models is rendered in order to associate the three-dimensional model rendered in the virtual space 200 with the three-dimensional model rendered on the virtual screen (Step 2416). Specifically, a line segment connecting the vertex coordinates $p$ of the three-dimensional model 231 to the vertex coordinates $p$' of the three-dimensional model 2301 is rendered. It is possible to easily associate an object in the virtual space 200 with an object displayed on the virtual screen 272 by the line segment connecting two three-dimensional models even in a panoramic view.

It is desired that the line segment connecting two three-dimensional models connect all or a part of vertices of two three-dimensional models. Further, the line segment connecting two three-dimensional models is optional, and may not be displayed. Further, the line segment connecting two three-dimensional models may not be displayed for all the pieces of equipment, and only need to be displayed in numbers that do not complicate the screen. Further, the line segment connecting two three-dimensional models may not be usually rendered, but may be rendered when the user selects a piece of equipment (e.g., selects a three-dimensional model with a mouse-over operation).

FIG. 23B is a diagram for illustrating an example of rendering a three-dimensional model of the equipment on the virtual screen. In Step 2415, in a case where the three-dimensional model 231 is rendered inside the virtual screen 272, similarly to the first embodiment, the data structure of the three-dimensional model 231 is formed of vertex data on a triangle and order data connecting three vertices forming each surface. Further, the photographing position of the virtual screen is represented by $c=(x_c, y_c, z_c)$, and the radius of the cylinder is represented by $R$.

Then, the area 2320 having a distance of from $r_1$ to $r_2$ from the photography viewpoint 212 at the center of the cylinder forming the virtual screen 272 is converted into a region 2330 near and inside the cylinder surface. When the region 2330 is defined as a region having a distance of from $r1$' to $r2$' from the center of the cylinder, Expressions (8) and (9) can be used to convert coordinates of the point $p=[x, y, z]$.

$$p_c = \begin{bmatrix} x \\ y \\ z \end{bmatrix} - \begin{bmatrix} x_c \\ y_c \\ z_c \end{bmatrix} \quad \cdots (8)$$

$$p' = (|p_c| - r_1)\frac{r_2' - r_1'}{r_2 - r_1}p_c + \begin{bmatrix} x_c \\ y_c \\ z_c \end{bmatrix} \quad \cdots (9)$$

In Expression (8) and Expression (9), $p_c$ represents relative coordinates obtained in a case where the point $p=[x, y, z]$ is converted with the coordinates $[x_c, y_c, z_c]$ corresponding to the photography viewpoint being the origin, and Expression (9) can be used to convert a distance $|p_c|$ from the photography viewpoint. Expression (8) and Expression (9) are used to render the three-dimensional model 2301 with a point $p'$ obtained by converting each vertex $p$ of the three-dimensional model 231 being a vertex.

The three-dimensional model 2301 on the virtual screen 272 is rendered on the narrow region 2330 inside the cylinder surface. When this region is observed at the photography viewpoint 212, the image 236 of the entire peripheral image and the three-dimensional model 2301 are seen in an overlapping manner. In other words, an object photographed as an entire peripheral image mapped to the virtual screen 272 and a three-dimensional model of the object are displayed in an overlapping manner. Further, in a case where the region 2330 is small enough, those three-dimensional models are also seen in an overlapping manner also at a place other than the photography viewpoint 212.

As described above, according to the fifth embodiment of this invention, the image generation device 302 maps a three-dimensional model of an object existing in the real space 100 to a position at which the three-dimensional model is to be displayed on the virtual screen, and thus the image 236 of the entire peripheral image and the three-dimensional model 2301 are displayed on the virtual screen in an overlapping manner. Therefore, it is possible to grasp a plurality of entire peripheral images in a panoramic view.

Further, the image generation device 302 displays the line segment associating a three-dimensional model arranged in the virtual three-dimensional space 200 with a three-dimensional model mapped to the virtual screen, and thus it is possible to easily associate an object in the virtual space 200 with an object displayed on the virtual screen 272 in a panoramic view.

This invention is not limited to the above-described embodiments but includes various modifications. The above-described embodiments are explained in details for better understanding of this invention and are not limited to those including all the configurations described above. A part of the configuration of one embodiment may be replaced with that of another embodiment; the configuration of one embodiment may be incorporated to the configuration of another embodiment. A part of the configuration of each embodiment may be added, deleted, or replaced by that of a different configuration.

The above-described configurations, functions, processing modules, and processing means, for all or a part of them, may be implemented by hardware: for example, by designing an integrated circuit, and may be implemented by software, which means that a processor interprets and executes programs providing the functions.

The information of programs, tables, and files to implement the functions may be stored in a storage device such as a memory, a hard disk drive, or an SSD (a Solid State Drive), or a storage medium such as an IC card, or an SD card.

The drawings illustrate control lines and information lines as considered necessary for explanation but do not illustrate all control lines or information lines in the products. It can be considered that almost of all components are actually interconnected.

**Claims**

1.  An image generation device, which is configured to generate an image to be displayed on a display device, the image generation device comprising:

    a processor configured to execute a program; and
    a memory configured to store the program,
    wherein the processor is configured to:

    arrange a three-dimensional model of an object existing in a real space in a virtual three-dimensional space;
    arrange at least one tube-shaped virtual screen including a predetermined photographing position in the virtual three-dimensional space;
    execute arithmetic processing of mapping an entire peripheral image captured at the predetermined photographing position to the at least one tube-shaped virtual screen; and
    generate image data for displaying, in a panoramic view, the virtual three-dimensional space in which the three-dimensional model and the at least one tube-shaped virtual screen are arranged.

2.  The image generation device according to claim 1, wherein the at least one tube-shaped virtual screen has a shape of a cylinder.

3.  The image generation device according to claim 2,
    wherein a plurality of virtual screens are arranged in the virtual three-dimensional space, and
    wherein the processor is configured to:

    calculate a radius of the cylinder so that the plurality of virtual screens are inhibited from overlapping with each other; and
    arrange a cylindrical virtual screen having the calculated radius in the virtual three-dimensional space.

4.  The image generation device according to claim 1, wherein the processor is configured to:

    generate image data for displaying at least one marker near the predetermined photographing position in the virtual three-dimensional space; and
    execute arithmetic processing of changing one of a shape of the at least one tube-shaped virtual screen and the entire peripheral image to be mapped to the at least one tube-shaped virtual screen in a case of detecting operation of the at least one marker.

5.  The image generation device according to claim 4, wherein the at least one marker includes at least one of:

    a marker to be operated to change the entire peripheral image to an entire peripheral image at a different photographing position;
    a marker to be operated to change a viewpoint distance in the virtual three-dimensional space;
    a marker to be operated to change a size of the at least one tube-shaped virtual screen;
    a marker to be operated to change a shape of the at least one tube-shaped virtual screen; and
    a marker to be operated to update the entire peripheral image to a latest image.

6.  The image generation device according to claim 1, wherein the processor is configured to:

    transmit a moving instruction and a photographing instruction to a camera configured to capture the entire peripheral image; and
    obtain an entire peripheral image captured at a place to which the camera has moved in response to the moving instruction.

7.  The image generation device according to claim 1,
    wherein the image generation device is coupled to a database configured to store the entire peripheral image, and
    wherein the processor is configured to:

    obtain from the database an entire peripheral image captured at a time specified by a user; and
    map the obtained entire peripheral image to the at least one tube-shaped virtual screen.

8. The image generation device according to claim 1, wherein the processor is configured to:

   generate, in a case where selection of a position in the virtual three-dimensional space is detected, a virtual screen containing the selected position;
   map the entire peripheral image to the generated virtual screen; and
   arrange the generated virtual screen in the virtual three-dimensional space.

9. The image generation device according to claim 1, wherein the processor is configured to map a three-dimensional model of an object existing in the real space to a position of the at least one tube-shaped virtual screen at which the object is to be displayed.

10. The image generation device according to claim 9, wherein the processor is configured to arrange, in the virtual three-dimensional space, a display for associating a three-dimensional model arranged in the virtual three-dimensional space with a three-dimensional model mapped to the at least one tube-shaped virtual screen.

11. An image generation system, comprising:

   an image generation device configured to generate an image to be displayed on a display device; and
   a camera configured to capture an entire peripheral image in a real space,
   the image generation device comprising:

   a processor configured to execute a program;
   a memory configured to store the program; and
   an interface configured to acquire an entire peripheral image captured by the camera,

   wherein the image generation device is configured to:

   acquire an entire peripheral image captured by the camera;
   arrange a three-dimensional model of an object existing in a real space in a virtual three-dimensional space;
   arrange at least one tube-shaped virtual screen including a predetermined photographing position in the virtual three-dimensional space;
   execute arithmetic processing of mapping an entire peripheral image captured at the predetermined photographing position to the at least one tube-shaped virtual screen; and
   generate image data for displaying, in a panoramic view, the virtual three-dimensional space in which the three-dimensional model and the at least one tube-shaped virtual screen are arranged.

12. The image generation system according to claim 11,
   wherein the image generation device is configured to transmit a moving instruction and a photographing instruction to the camera,
   wherein the camera is configured to move to a place specified by the moving instruction and capture an entire peripheral image at the place to which the camera has moved, and
   wherein the image generation device is configured to obtain the captured entire peripheral image.

13. The image generation system according to claim 11, wherein the image generation device is configured to:

   generate image data for displaying a marker for instructing movement of the camera in the virtual three-dimensional space; and
   transmit a moving instruction and a photographing instruction to the camera in a case where selection of the marker is detected.

14. An image generation method for generating an image by an image generation device,
   the image generation device comprising:

   a processor configured to execute a program; and
   a memory configured to store the program,
   the image generation method comprising;
   arranging, by the processor, a three-dimensional model of an object existing in a real space in a virtual three-dimensional space;

arranging, by the processor, at least one tube-shaped virtual screen containing a predetermined photographing position in the virtual three-dimensional space;

executing, by the processor, arithmetic processing of mapping an entire peripheral image captured at the predetermined photographing position to the at least one tube-shaped virtual screen; and

generating, by the processor, image data for displaying, in a panoramic view, the virtual three-dimensional space in which the three-dimensional model and the at least one tube-shaped virtual screen are arranged.

15. The image generation method according to claim 14, further comprising:

generating, by the processor, in a case where selection of a position in the virtual three-dimensional space is detected, a virtual screen containing the selected position;

mapping, by the processor, an entire peripheral image to the generated virtual screen; and

arranging, by the processor, the generated virtual screen in the virtual three-dimensional space.

**Fig. 1**

EP 3 330 928 A1

**200 VIRTUAL SPACE**

232 233

241 221

211

241 242

272

212

312 PIECES

312 PIECES

252

312 PIECES

253

271

231

251

236

*Fig. 2*

EP 3 330 928 A1

*Fig. 3*

| CPU | NETWORK I/F | INPUT I/F |
| --- | --- | --- |

| MAIN MEMORY UNIT | AUXILIARY STORAGE UNIT | IMAGE PROCESSING UNIT |
| --- | --- | --- |

*Fig. 4*

*Fig. 5A*

*Fig. 5B*

*Fig. 6*

*Fig. 7A*

*Fig. 7B*

*Fig. 7C*

Fig. 7D

EP 3 330 928 A1

802    IS THERE PHOTOGRAPHING TRIGGER? — NO →

YES ↓

803    CAPTURE IMAGE AND STORE CAPTURED IMAGE INTO MEMORY

804    CONVERT CAPTURED IMAGE INTO PREDETERMINED FORMAT USING CALIBRATION DATA

805    ENCODE IMAGE

806    STORE IMAGE

807    REGISTER IMAGE MANAGEMENT INFORMATION WITH DB

## Fig. 8

902 — IS THERE READ TRIGGER? — NO

YES

903 — ACQUIRE STATES OF EQUIPMENTS

904 — STORE ACQUIRED STATES INTO DB

*Fig. 9*

1001 — INITIALIZE

1002 — OBTAIN INSTRUCTION FROM INPUT DEVICE

1003 — CREATE VIEWPOINT INFORMATION

1004 — INITIALIZE MEMORY

1005 — OBTAIN EQUIPMENT INFORMATION

1006 — RENDER THREE-DIMENSIONAL MODEL AND EQUIPMENT INFORMATION

1007 — ACQUIRE ENTIRE PERIPHERAL IMAGE

1008 — RENDER VIRTUAL SCREEN ON WHICH ENTIRE PERIPHERAL IMAGE IS MAPPED

1009 — OUTPUT DATA STORED IN MEMORY

*Fig. 10*

1101 OBTAIN CAMERA ARRANGEMENT
INFORMATION

1102 OBTAIN INITIAL INFORMATION
ON 3D MODEL

## Fig. 11

| 1201 | 1202 | 1203 |
| --- | --- | --- |
| CAMERA ID | PHOTOGRAPHING TIME | FILE NAME |
| c001 | 2015/7/1 08:32:24:00 | http://.... |
|  |  |  |
|  |  |  |
|  |  |  |

## Fig. 12

| CAMERA ID | POSITION | SHAPE | SIZE | HEIGHT | ADDRESS |
|---|---|---|---|---|---|
| C001 | (34,56) | CYLINDER | r=6.2 | h=2.7 | http://.... |
|  |  |  |  |  |  |
|  |  |  |  |  |  |
|  |  |  |  |  |  |

1301  1302  1303  1304  1305  1306

## Fig. 13A

| EQUIPMENT ID | POSITION | SHAPE | ADDRESS |
|---|---|---|---|
| C001 | (34,56) | CUBE | http://.... |
|  |  |  |  |
|  |  |  |  |
|  |  |  |  |

1311  1312  1313  1314

## Fig. 13B

1401 DENSE STATE OF CAMERAS

*Fig. 14A*

1402 REMOVED STATE OF CAMERAS

*Fig. 14B*

1401 EXAMPLE OF DENSE
STATE OF CAMERAS

*Fig. 15A*

1401 EXAMPLE OF STATE
AFTER CAMERAS ARE
REMOVED

*Fig. 15B*

1601 — RECEIVE CAMERA ARRANGEMENT

1602 — CREATE DATA STRUCTURE

1603 — CREATE VORONOI DIAGRAM WITH CAMERA POSITION BEING SET AS VORONOI POINT

1604 — CALCULATE DISTANCE FROM VORONOI POINT TO POINT ON VORONOI BOUNDARY, WHICH IS CLOSEST TO VORONOI POINT

1605 — SELECT CAMERA HAVING SHORTEST DISTANCE FROM VORONOI POINT TO VORONOI BOUNDARY

1607 — HIDE CAMERA

1606 — DISTANCE TO VORONOI BOUNDARY IS EQUAL TO OR SMALLER THAN THRESHOLD VALUE?

YES

NO

1608 — SELECT EACH HIDDEN CAMERA

1609 — SET CAMERA CONTAINING HIDDEN CAMERA IN VORONOI REGION AS PARENT CAMERA, AND REGISTER PARENT CAMERA WITH STRUCTURE

1610 — ALL HIDDEN CAMERAS HAVE BEEN PROCESSED?

NO

YES

1611 — REGISTER DATA

*Fig. 16*

| CAMERA ID | POSITION | VORONOI REGION | DISPLAY | RADIUS | PARENT CAMERA | CHILD CAMERA |
|-----------|----------|----------------|---------|--------|---------------|--------------|
| 1701 | 1702 | 1703 | 1704 | 1705 | 1706 | 1707 |
| C001 | (34,56) | (27,4)(23,47)... | False | 12 | C007 | - |
| C002 | (430,68) | (427,4)(483,47)... | True | 13 | - | C003,C090 |
| | | | | | | |
| | | | | | | |

1700

## Fig. 17

272

1802 dolly

1801

reflesh 1805

scale 1803

rectangle 1804

1810

1811

1812

## Fig. 18

1911

1912

1920

1914

1913

2001

## Fig. 19

100 WORK SPACE

2001

1920

## Fig. 20A

2021
2022
2023
2024
200 VIRTUAL SPACE
2020
2025
2025
2026
2027
2028

*Fig. 20B*

2100
2101
2102
2103

| CAMERA ID | POSITION | DRIVE AMOUNT |
|---|---|---|
| C001 | (123,23,450) | 10 |
| C001 | (123,23,440) | 20 |
| C001 | (123,23,430) | 30 |
| C001 | (123,23,420) | 40 |
| C001 | (133,23,420) | 50 |
|  |  |  |
|  |  |  |

*Fig. 21*

302
IMAGE GENERATION DEVICE

2001
CAMERA

2201 — DETECT SELECTION OF MARKER

2202 — READ DATA ON POINT OF PASSAGE REPRESENTED BY MARKER

2203 — TRANSMIT MOTOR DRIVE AMOUNT TO CAMERA

2210 — RECEIVE MOVING INSTRUCTION

2211 — DRIVE AND MOVE MOTOR

2212 — CAPTURE AND STORE IMAGE

2204 — RECEIVE PHOTOGRAPHY COMPLETION MESSAGE

2213 — PHOTOGRAPHY COMPLETION MESSAGE

2205 — READ IMAGE

*Fig. 22*

231

212  2301  236  2320

2320

272

*Fig. 23A*

212  2301  2302  236

231  232

272

$r_1' r_2$

2330  2320

$r_1$  $r_2$

*Fig. 23B*

1001 INITIALIZE

1002 ACQUIRE INSTRUCTION FROM INPUT DEVICE

1003 CREATE VIEWPOINT INFORMATION

1004 INITIALIZE MEMORY

1005 ACQUIRE EQUIPMENT INFORMATION

2406 RENDER THREE-DIMENSIONAL MODEL AND EQUIPMENT INFORMATION

1007 ACQUIRE ENTIRE PERIPHERAL IMAGE

1008 RENDER VIRTUAL SCREEN ON WHICH ENTIRE PERIPHERAL IMAGE IS MAPPED

1009 OUTPUT DATA STORED IN MEMORY

2406

2411 IS THERE EQUIPMENT YET TO BE SUBJECTED TO RENDERING PROCESSING?  NO

YES

2412 RENDER EQUIPMENT IN VIRTUAL SPACE

2413 SUBJECT EQUIPMENT IS TO BE DISPLAYED?  NO

YES

2414 ACQUIRE INFORMATION ON VIRTUAL SCREEN TO BE SUBJECTED TO RENDERING PROCESSING

2415 RENDER EQUIPMENT ON VIRTUAL SCREEN

2416 RENDER LINE CONNECTING THREE-DIMENSIONAL MODEL IN VIRTUAL SPACE TO THREE-DIMENSIONAL MODEL ON VIRTUAL SCREEN

*Fig. 24*

## INTERNATIONAL SEARCH REPORT

| | International application No. |
|---|---|
| | PCT/JP2015/071392 |

| A. CLASSIFICATION OF SUBJECT MATTER |
|---|
| G06T19/00(2011.01)i |

According to International Patent Classification (IPC) or to both national classification and IPC

| B. FIELDS SEARCHED |
|---|

Minimum documentation searched (classification system followed by classification symbols)
G06T19/00

Documentation searched other than minimum documentation to the extent that such documents are included in the fields searched
Jitsuyo Shinan Koho        1922–1996   Jitsuyo Shinan Toroku Koho   1996–2015
Kokai Jitsuyo Shinan Koho   1971–2015   Toroku Jitsuyo Shinan Koho   1994–2015

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | JP 2008-287696 A (Monolith Co., Ltd.), 27 November 2008 (27.11.2008), | 1-2,4-9, 11-15 |
| A | paragraphs [0014] to [0016], [0025]; fig. 1 | 3,10 |
| Y | JP 2009-129183 A (International Business Machines Corp.), | 1-2,4-9, 11-15 |
| A | 11 June 2009 (11.06.2009), paragraphs [0064], [0072], [0092]; fig. 9 | 3,10 |
| Y | JP 2010-531007 A (Google Inc.), 16 September 2010 (16.09.2010), paragraphs [0023] to [0024]; fig. 3 | 4-5,13 |
| Y | Toshimichi AOKI et al., "Reconstruction Environment Using Multi-Viewpoint Images", IEICE Technical Report, 18 March 1999 (18.03. 1999), vol.98, no.677, pages 57 to 64 | 6,12 |

| ☒ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 September 2015 (30.09.15) | 13 October 2015 (13.10.15) |

| Name and mailing address of the ISA/ Japan Patent Office 3-4-3,Kasumigaseki,Chiyoda-ku, Tokyo 100-8915,Japan | Authorized officer |
|---|---|
| | Telephone No. |

Form PCT/ISA/210 (second sheet) (July 2009)

**INTERNATIONAL SEARCH REPORT**

| International application No. |
|---|
| PCT/JP2015/071392 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-250560 A   (Mitsubishi Electric Corp.), 15 September 2005 (15.09.2005), paragraph [0128]; fig. 13 | 1-15 |
| A | US 8325187 B2   (SAMSUNG ELECTRONICS CO., LTD.), 04 December 2012 (04.12.2012), claim 1; fig. 5 | 1-15 |

Form PCT/ISA/210 (continuation of second sheet) (July 2009)

<table>
<thead>
<tr><th colspan="2">**INTERNATIONAL SEARCH REPORT**<br>Information on patent family members</th><th>International application No.<br>PCT/JP2015/071392</th></tr>
</thead>
</table>

| | | |
|---|---|---|
| JP 2008-287696 A | 2008.11.27 | US 2008/0309668 A1 |
| JP 2009-129183 A | 2009.06.11 | US 2009/0135178 A1 |
| JP 2010-531007 A | 2010.09.16 | JP 2011-150734 A<br>JP 5145414 B2<br>JP 2013-84307 A<br>JP 2014-170580 A<br>US 2008/0291217 A1<br>US 2008/0291201 A1<br>US 2008/0292213 A1<br>US 2011/0254915 A1<br>US 2014/0160119 A1<br>US 2015/0161820 A1<br>WO 2008/147561 A2<br>EP 2171690 A2<br>EP 2518686 A1<br>CA 2688339 A1<br>CN 101743569 A<br>AU 2008257162 A1<br>CN 102609973 A<br>AU 2013206055 A1 |
| JP 2005-250560 A | 2005.09.15 | (Family: none) |
| US 8325187 B2 | 2012.12.04 | EP 2315075 A1<br>KR 10-2011-0044133 A |

Form PCT/ISA/210 (patent family annex) (July 2009)

**REFERENCES CITED IN THE DESCRIPTION**

**Patent documents cited in the description**

- WO 2008147561 A2

- JP 2007226580 A